# EUROPEAN PATENT APPLICATION

(11) **EP 4 653 640 A1**
(43) Date of publication of application: **26.11.2025**
(21) Application number: 24744715.4
(22) Date of filing: 18.01.2024
(51) Int. Cl.: E04G 21/12, B21F 15/06, E04C 5/16

(54) **REBAR BINDING DEVICE**

(30) Priority: 20.01.2023 JP 2023007187
(71) Applicant: MAX CO., LTD., Tokyo 103-8502 (JP)
(72) Inventor: KISHI, Kazuhiko, Tokyo 103-8502 (JP)
(74) Representative: Samson & Partner Patentanwälte mbB
(86) International application number: PCT/JP2024/001327
(87) International publication number: WO 2024/154795

(57) **Abstract**

A binding mechanism (70) that binds a binding section where a reinforcing bar extending in a first direction intersects with a reinforcing bar extending in a second direction that intersects with the first direction, and a main body (11) to which the binding mechanism (70) is mounted are included, and the main body (11) holds the binding mechanism (70) such that the binding mechanism is rotatable around a rotation axis that extends in a height direction of the main body (11).

## Description

### TECHNICAL FIELD

The present disclosure relates to a reinforcing bar binding device.

### BACKGROUND ART

In related art, various techniques have been proposed for automating reinforcing bar binding during building construction. For example, Patent Literature 1 describes a self-propelled reinforcing bar binding robot that has a function of moving in a longitudinal direction using a pair of parallel reinforcing bars as traveling rails, and a function of moving in a lateral direction between the parallel reinforcing bars, and if the robot detects a reinforcing bar extending in the lateral direction while moving in the longitudinal direction, the robot stops moving and binds the reinforcing bars at a place where the reinforcing bar extending in the longitudinal direction and the reinforcing bar extending in the lateral direction intersect with each other.

### CITATION LIST

### PATENT LITERATURE

Patent Literature 1: JP2019-039174A

### SUMMARY OF INVENTION

### TECHNICAL PROBLEM

However, in the related art, it was sometimes not possible to properly perform binding on reinforcing bars extending in the longitudinal direction and reinforcing bars extending in the lateral direction that intersect with each other obliquely, and there is a demand for improved versatility.

The present disclosure has been made in consideration of the above circumstances, and an object thereof is to provide a reinforcing bar binding device capable of performing binding with high versatility.

### SOLUTION TO PROBLEM

A reinforcing bar binding device according to an aspect of the present disclosure includes: a binding mechanism that binds a binding section where a reinforcing bar extending in a first direction intersects with a reinforcing bar extending in a second direction that intersects with the first direction; and a main body to which the binding mechanism is mounted, in which the main body holds the binding mechanism such that the binding mechanism is rotatable around a rotation axis that extends in a height direction of the main body.

According to this aspect, an orientation of the binding mechanism can be changed by rotating the binding mechanism around the rotation axis that extends in the height direction of the main body. Therefore, the reinforcing bar binding device can perform binding processing on the binding section not only when the reinforcing bar extending in the first direction and the reinforcing bar extending in the second direction intersect with each other at a right angle, but also when the reinforcing bar extending in the first direction and the reinforcing bar extending in the second direction intersect with each other obliquely, making the binding processing highly versatile.

### ADVANTAGEOUS EFFECTS OF INVENTION

According to the present disclosure, binding can be performed with high versatility.

### BRIEF DESCRIPTION OF DRAWINGS

[FIG. 1] FIG. 1 is a perspective view of a reinforcing bar binding device according to an embodiment;
[FIG. 2] FIG. 2 is a perspective view of the reinforcing bar binding device according to the embodiment;
[FIG. 3] FIG. 3 is a perspective view of a first unit;

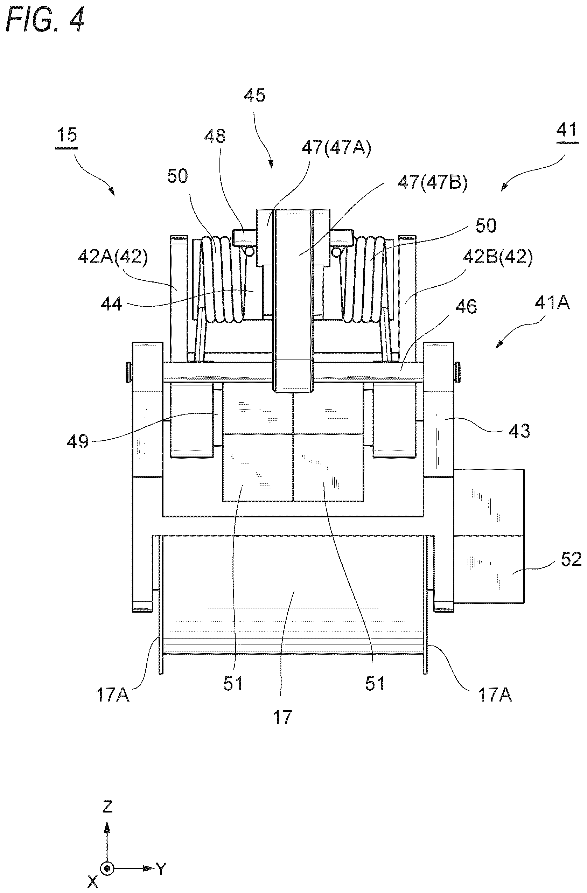

[FIG. 4] FIG. 4 is a front view of a leg;

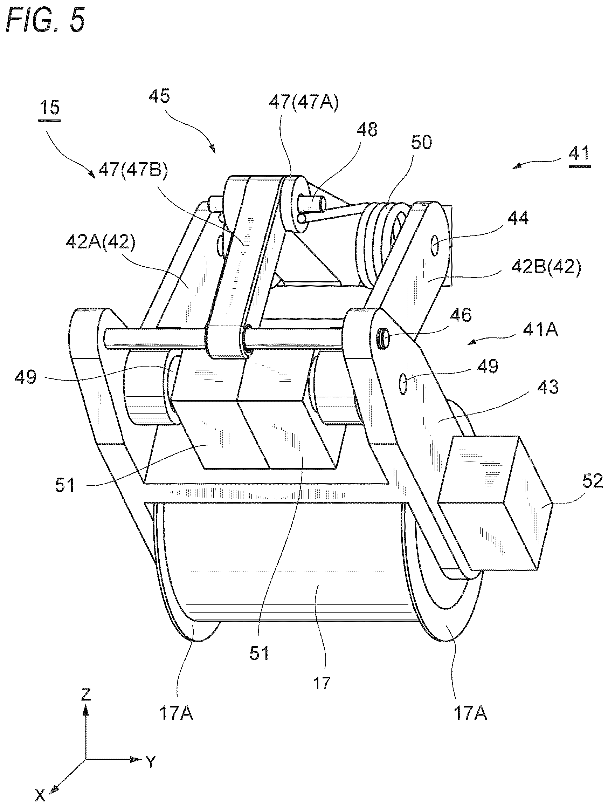

[FIG. 5] FIG. 5 is a perspective view of the leg;

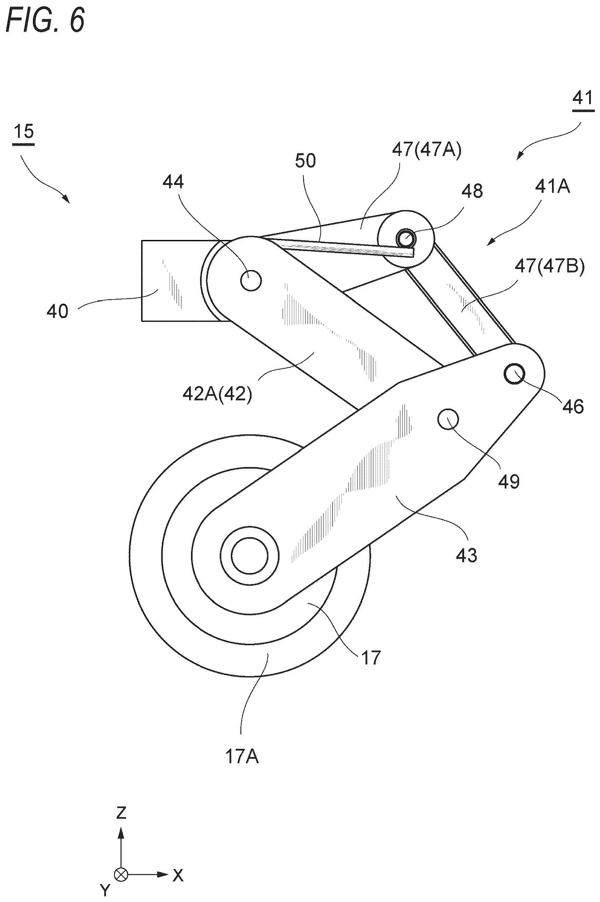

[FIG. 6] FIG. 6 is a side view of the leg;
[FIG. 7] FIG. 7 is a side view of the leg;
[FIG. 8] FIG. 8 is a side view of the leg;
[FIG. 9] FIG. 9 is a perspective view of the reinforcing bar binding device according to the embodiment;
[FIG. 10] FIG. 10 is a perspective view of the reinforcing bar binding device according to the embodiment;
[FIG. 11A] FIG. 11A is a diagram showing an operation of the reinforcing bar binding device during binding processing;
[FIG. 11B] FIG. 11B is a diagram showing the operation of the reinforcing bar binding device during the binding processing;
[FIG. 11C] FIG. 11C is a diagram showing the operation of the reinforcing bar binding device during the binding processing;
[FIG. 12A] FIG. 12A is a diagram showing the operation of the reinforcing bar binding device during the binding processing;
[FIG. 12B] FIG. 12B is a diagram showing the operation of the reinforcing bar binding device during the binding processing;
[FIG. 12C] FIG. 12C is a diagram showing the operation of the reinforcing bar binding device during the binding processing;
[FIG. 13] FIG. 13 is a block diagram showing a control configuration of the reinforcing bar binding device according to the embodiment;
[FIG. 14] FIG. 14 is a flowchart showing a processing content of the binding processing;
[FIG. 15] FIG. 15 is a flowchart showing a processing content of lateral movement processing;
[FIG. 16A] FIG. 16A is a diagram showing an operation of the reinforcing bar binding device during the lateral movement processing;
[FIG. 16B] FIG. 16B is a diagram showing the operation of the reinforcing bar binding device during the lateral movement processing;
[FIG. 17A] FIG. 17A is a diagram showing the operation of the reinforcing bar binding device during the lateral movement processing;
[FIG. 17B] FIG. 17B is a diagram showing the operation of the reinforcing bar binding device during the lateral movement processing;
[FIG. 18A] FIG. 18A is a diagram showing the operation of the reinforcing bar binding device during the lateral movement processing;
[FIG. 18B] FIG. 18B is a diagram showing the operation of the reinforcing bar binding device during the lateral movement processing;
[FIG. 19A] FIG. 19A is a diagram showing the operation of the reinforcing bar binding device during the lateral movement processing;
[FIG. 19B] FIG. 19B is a diagram showing the operation of the reinforcing bar binding device during the lateral movement processing;
[FIG. 20A] FIG. 20A is a diagram showing the operation of the reinforcing bar binding device during the lateral movement processing;
[FIG. 20B] FIG. 20B is a diagram showing the operation of the reinforcing bar binding device during the lateral movement processing;
[FIG. 21A] FIG. 21A is a diagram showing the operation of the reinforcing bar binding device during the lateral movement processing; and
[FIG. 21B] FIG. 21B is a diagram showing the operation of the reinforcing bar binding device during the lateral movement processing.

### DESCRIPTION OF EMBODIMENTS

A reinforcing bar binding device of the present embodiment will be described with reference to the drawings. In the following description, for the sake of convenience in understanding the specification, an advancing direction of the reinforcing bar binding device is defined as an X-axis direction, a width direction of the reinforcing bar binding device is defined as a Y-axis direction, and a height direction of the reinforcing bar binding device is defined as a Z-axis direction.

The reinforcing bar binding device of the present embodiment is a self-propelled robot, and is a device that automatically performs binding processing on a binding section where a reinforcing bar extending in the X-axis direction (hereinafter also referred to as a "longitudinal bar") and a reinforcing bar extending in the Y-axis direction (hereinafter also referred to as a "lateral bar") intersect with each other in, for example, building construction. When the reinforcing bar binding device is in operation, the reinforcing bar binding device travels along the X-axis direction following the longitudinal bar, and when a lateral bar is detected, the reinforcing bar binding device stops traveling and performs binding processing on the binding section. The reinforcing bar binding device resumes traveling once the binding processing is completed. Thereafter, the reinforcing bar binding device repeats the traveling, stopping, and binding, while performing the binding processing on a plurality of binding sections. When the reinforcing bar binding device reaches an end of the longitudinal bar in the X-axis direction, the reinforcing bar binding device performs lateral movement processing of moving to a longitudinal bar adjacent to the longitudinal bar on which the reinforcing bar binding device is traveling in the Y-axis direction. Then, when the lateral movement processing is completed, the reinforcing bar binding device resumes traveling in the X-axis direction following the longitudinal bar, and performs the binding processing on the binding sections on the adjacent longitudinal bar in the Y-axis direction.

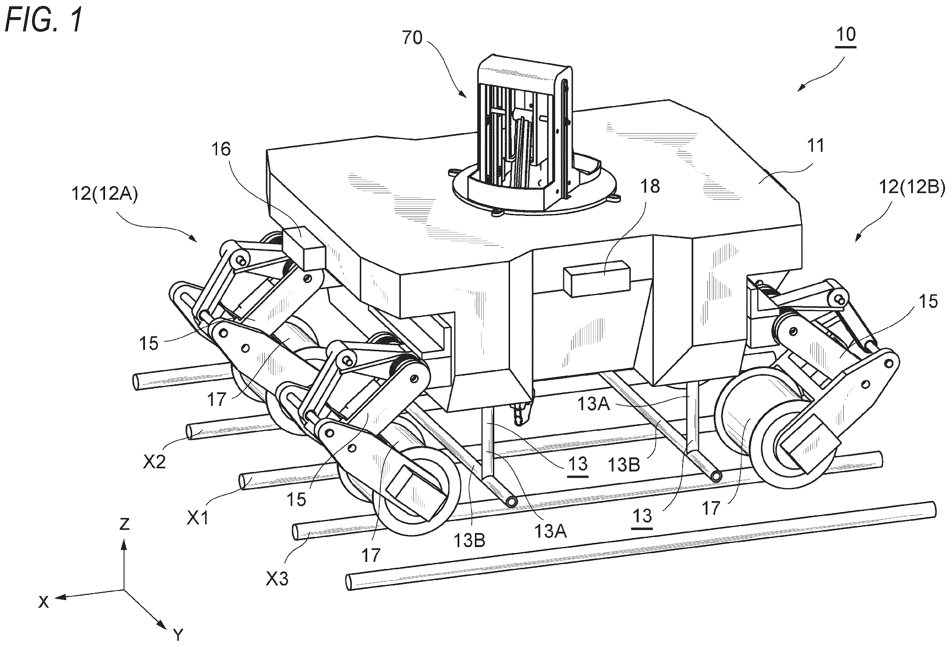

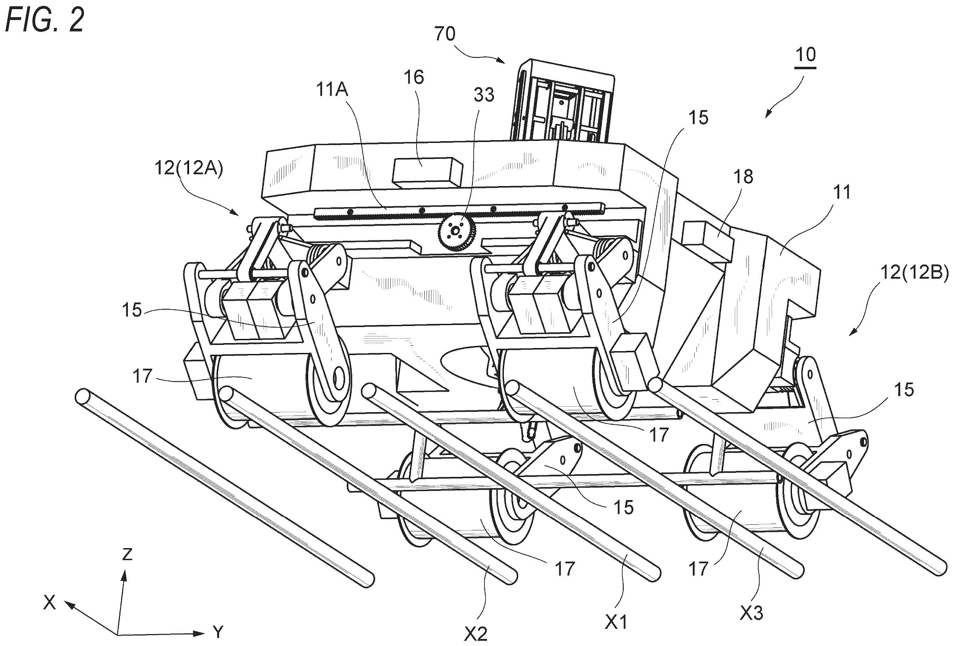

As shown in FIGS. 1 and 2, a reinforcing bar binding device 10 of the present embodiment includes a main body 11, a leg structure 12 connected to the main body 11, and a support frame 13 connected to the main body 11. The support frame 13 is an example of a support portion.

The leg structure 12 includes a first unit 12A and a second unit 12B that are provided in a pair at a front side and a rear side of the main body 11. The support frame 13 is disposed, for example, between the first unit 12A and the second unit 12B. The support frame 13 may be disposed in front of the first unit 12A (a front side in the advancing direction of the reinforcing bar binding device 10) or behind the second unit 12B (a rear side in the advancing direction of the reinforcing bar binding device 10). Each of the first unit 12A and the second unit 12B includes two legs 15. One leg 15 of the first unit 12A and one leg 15 of the second unit 12B constitute an example of a third leg, and are provided on one side of the main body 11 in the Y-axis direction. The other leg 15 of the first unit 12A and the other leg 15 of the second unit 12B constitute an example of a fourth leg, and are provided on the other side of the main body 11 in the Y-axis direction. The two legs 15 of the first unit 12A constitute an example of a first leg, and are provided on one side of the main body 11 in the X-axis direction (the front side in the advancing direction of the reinforcing bar binding device 10). The two legs 15 of the second unit 12B constitute an example of a second leg, and are provided on the other side of the main body 11 in the X-axis direction (the rear side in the advancing direction of the reinforcing bar binding device 10). The number of the legs 15 of each of the first unit 12A and the second unit 12B may be one, or three or more. Each leg 15 can be extended and retracted individually, and a height of the main body 11 can be adjusted through extension and retraction of each leg 15. The support frame 13 has a frame shape extending along the Y-axis direction, and includes two first frame portions 13A extending in the Z-axis direction from a lower surface of the main body 11, and a second frame portion 13B extending in the Y-axis direction and connecting lower ends of the two first frame portions 13A. A dimension of the second frame portion 13B in the Y-axis direction is configured to be, for example, approximately three times a distance between adjacent longitudinal bars in the Y-axis direction. The dimension of the second frame portion 13B in the Y-axis direction may also be configured to be, for example, approximately the same as the distance between adjacent longitudinal bars in the Y-axis direction. In this way, when the height of the main body 11 decreases with the extension and retraction of each leg 15, the support frame 13 is placed such that the second frame portion 13B of the support frame 13 straddles two adjacent longitudinal bars X1 and X3 or X1 and X2 in the Y-axis direction. That is, the second frame portion 13B of the support frame 13 is placed in a manner of straddling two longitudinal bars X1 and X3 or X1 and X2, including either the longitudinal bar X1 positioned in a center in the Y-axis direction of the main body 11 or the two longitudinal bars X2, X3 positioned on both sides of the longitudinal bar X1 in the Y-axis direction.

A sensor 16 is mounted on each side of the main body 11 in the X-axis direction. The sensor 16 is an example of a second detection unit. In the example shown in FIGS. 1 and 2, only the sensor 16 mounted on a front surface of the main body 11 is shown. An imaging range of the sensor 16 is, for example, below the main body 11, and the imaging range includes at least the longitudinal bar X1 positioned in the center of the main body 11 in the Y-axis direction. The sensor 16, for example, has a function of measuring a distance to an object, and detects that the object is the longitudinal bar X1 on condition that a measured value of the distance to the object matches a distance preset as a distance to the longitudinal bar X1. The two sensors 16 detect two points of the longitudinal bar X1 that are separated in the X-axis direction, and a direction in which a straight line connecting the two points detected by these sensors 16 extends is specified as a lengthwise direction of the longitudinal bar X1. Then, the reinforcing bar binding device 10 individually controls a rotation speed of each wheel 17 on both sides in the Y-axis direction so as to follow the specified lengthwise direction of the longitudinal bar X1. The reinforcing bar binding device 10 moves following the longitudinal bar X1 while controlling a movement direction of the reinforcing bar binding device 10 so as to move along the lengthwise direction of the longitudinal bar X1 specified as described above.

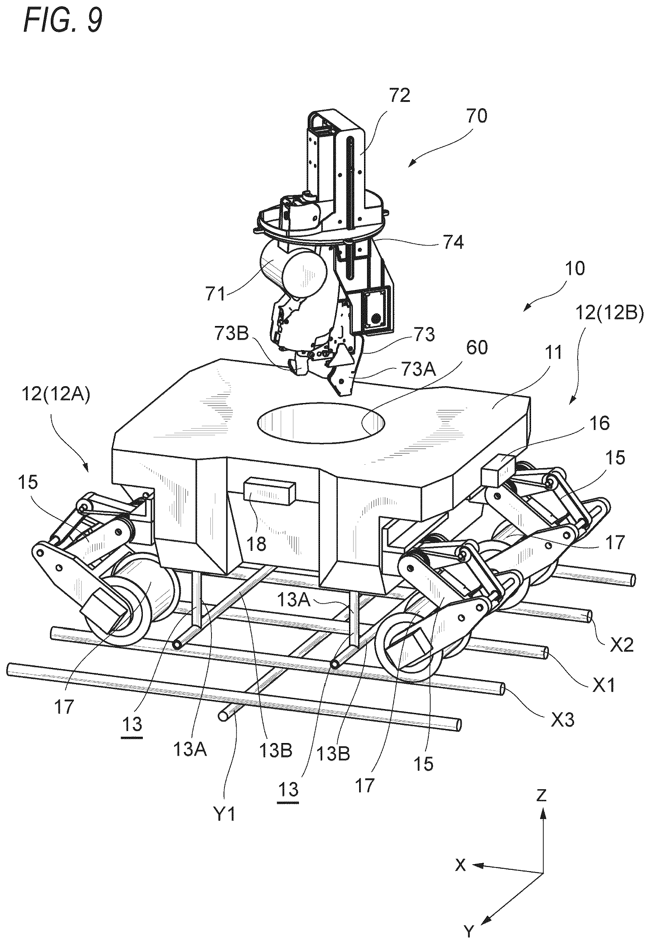

A sensor 18 is mounted on each side of the main body 11 in the Y-axis direction. The sensor 18 is an example of a first detection unit. In the example shown in FIGS. 1 and 2, only the sensor 18 mounted on one side surface of the main body 11 in the Y-axis direction is shown. An imaging range of the sensor 18 is, for example, below the main body 11, and the imaging range includes at least a lateral bar Y1 (see FIG. 9 and the like) that crosses the main body 11 in the Y-axis direction when the reinforcing bar binding device 10 reaches a vicinity of a binding section. The sensor 18, for example, has a function of measuring a distance to an object, and detects that the object is the lateral bar Y1 on condition that a measured value of the distance to the object matches a distance preset as a distance to the lateral bar Y1. The two sensors 18 detect two points of the lateral bar Y1 separated in the Y-axis direction, and when a lateral bar is detected by these sensors 18, a direction in which a straight line connecting the two detected points extends is specified as a lengthwise direction of the lateral bar. The reinforcing bar binding device 10 then calculates a section where the lengthwise direction of the longitudinal bar specified as described above intersects with the lengthwise direction of the lateral bar specified as described above as the binding section where the longitudinal bar and the lateral bar intersect with each other. When the reinforcing bar binding device 10 moves toward the calculated binding section, the reinforcing bar binding device 10 individually controls the rotation speeds of the wheels 17 on both sides in the Y-axis direction, and controls the movement direction of the reinforcing bar binding device 10 so that the position of the calculated binding section coincides in the Y-axis direction with a position of a binding unit 73 of the binding mechanism 70, which will be described later.

Next, a configuration of each unit constituting the leg structure 12 will be described. The first unit 12A and the second unit 12B have a common configuration. Therefore, the following description will be made using the first unit 12A as an example.

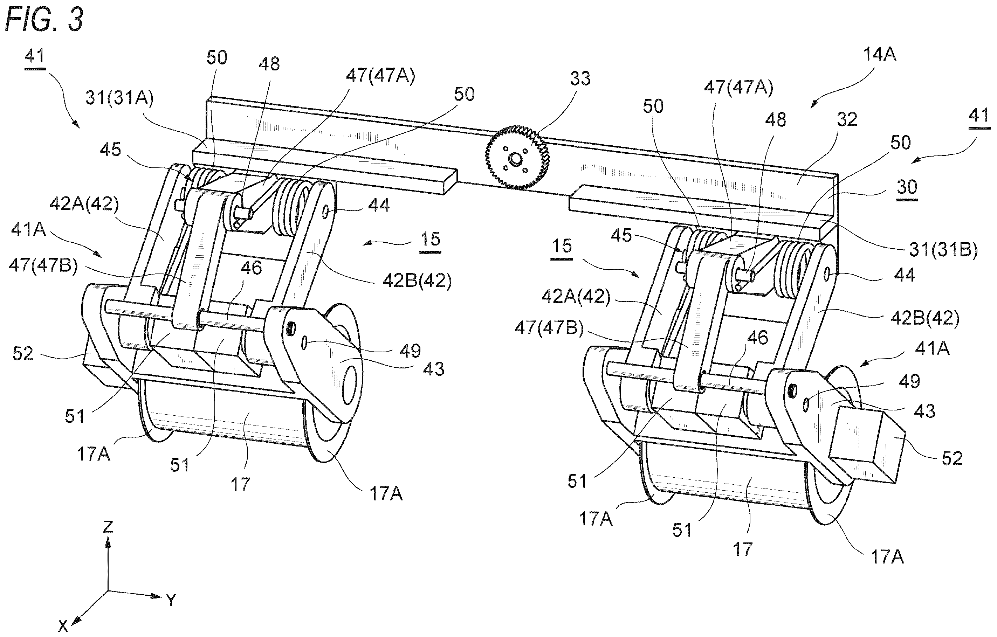

As shown in FIG. 3, the first unit 12A includes, for example, a connecting portion 30 that is connected to the main body 11 and extends long in one direction, and the legs 15 provided at a first end and a second end of the connecting portion 30 in the lengthwise direction. The connecting portion 30 has, for example, a substantially L-shaped cross section. The connecting portion 30 includes, for example, a bottom plate 31 and a side plate 32 protruding from the bottom plate 31 in the Z-axis direction. The bottom plate 31 includes, for example, a first bottom plate 31A positioned on one side of the connecting portion 30 in the lengthwise direction, and a second bottom plate 31B positioned on the other side of the connecting portion 30 in the lengthwise direction. Between the first bottom plate 31A and the second bottom plate 31B of the connecting portion 30, for example, a gap is formed in the lengthwise direction of the connecting portion 30. The side plate 32 extends, for example, over the entire connecting portion 30 in the lengthwise direction. That is, the connecting portion 30 may have a configuration in which the bottom plate 31 is cut out in a central portion in the lengthwise direction. A lateral movement roller 33 is provided at a central portion in the lengthwise direction of the side plate 32 of the connecting portion 30. The lateral movement roller 33 is an example of a drive gear, and constitutes a second drive unit. The lateral movement roller 33 meshes with, for example, a drive rack 11A provided on the main body 11. The drive rack 11A is an example of a meshing portion, and constitutes the second drive unit. The drive rack 11A includes, for example, a plurality of teeth that mesh with external teeth of the lateral movement roller 33 and are aligned linearly in the Y-axis direction. The lateral movement roller 33 may be provided on the main body 11, and the drive rack 11A may be provided on the connecting portion 30. When the lateral movement roller 33 rotates based on a driving force from a motor that constitutes the second drive unit, the lateral movement roller 33 moves relative to the drive rack 11A along the lengthwise direction of the drive rack 11A, and the main body 11 and the first unit 14A may move relative to each other in the Y-axis direction. For example, one leg 15 is connected to each of the first bottom plate 31A and the second bottom plate 31B of the connecting portion 30.

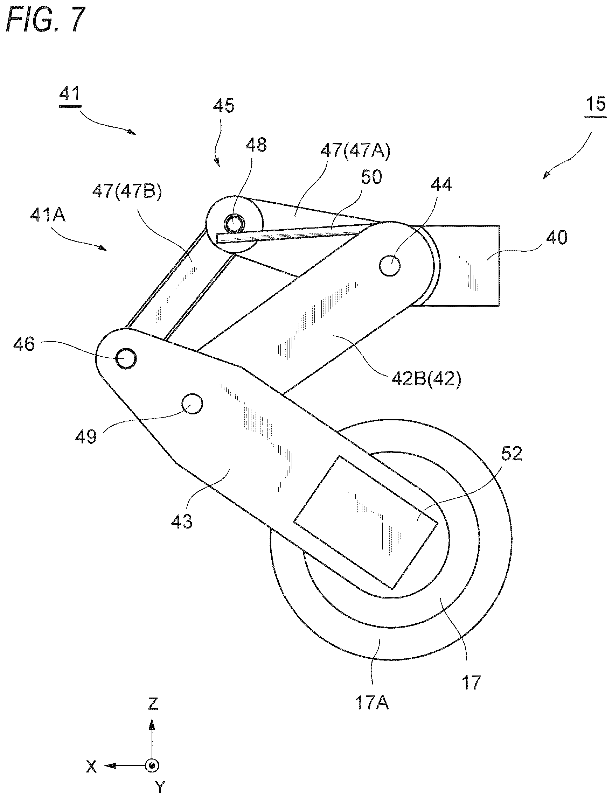

The leg 15 includes a base 40 (see FIG. 7 and the like) connected to the first bottom plate 31A or the second bottom plate 31B of the connecting portion 30. A displacement mechanism 41 is connected to the base 40. The displacement mechanism 41 is configured to displace, with a first end connected to the base 40 as a fixed end and a second end opposite to the first end as a free end. The displacement mechanism 41 includes a link mechanism 41A that connects the wheel 17 and the main body 11. The link mechanism 41A is an example of a junction portion, and is configured to extend and retract. The link mechanism 41A is connected with a plurality of links extending long in one direction in a rotatable manner, and the plurality of links include a first link 42 positioned at the first end and a second link 43 positioned at the second end. The first link 42 is connected to the second link 43 in a rotatable manner. The displacement mechanism 41 is provided on each leg 15 of the first unit 12A and the second unit 12B, and is configured to be independently controlled. In other words, the displacement mechanism 41 of the first leg and the displacement mechanism 41 of the second leg are configured to change the distance between the main body 11 and the longitudinal bar to different distances. The displacement mechanism 41 of the third leg and the displacement mechanism 41 of the fourth leg are configured to change the distance between the main body 11 and the longitudinal bar to different distances.

The first link 42 includes a pair of link members 42A, 42B connected, in a rotatable manner, to both ends in an axial direction of a rotation shaft 44 provided at a tip of the base 40, and a restricting link mechanism 45 connected, in a rotatable manner, to an intermediate position between the pair of link members 42A, 42B in the axial direction of the rotation shaft 44 and restricting a displacement direction of the displacement mechanism 41. The pair of link members 42A, 42B have a shape that extends long in one direction, and a first end is connected, in a rotatable manner, to the rotation shaft 44, and a second end is connected, in a rotatable manner, to a second rotation shaft 49 provided at a first end of the second link 43. The restricting link mechanism 45 is constructed by connecting a plurality of restricting links 47 extending long in one direction in a rotatable manner, and includes a first restricting link 47A connected to the tip of the base 40, and a second restricting link 47B connecting the first restricting link 47A and the second link 43. A first end of the first restricting link 47A is connected, in a rotatable manner, to the rotation shaft 44 provided at the tip of the base 40, and a second end of the first restricting link 47A is connected, in a rotatable manner, to a first end of the second restricting link 47B via a rotation shaft 48. The first end of the second restricting link 47B is connected, in a rotatable manner, to the second end of the first restricting link 47A via the rotation shaft 48, and a second end of the second restricting link 47B is connected, in a rotatable manner, to a first rotation shaft 46 provided at the first end of the second link 43. The rotation shaft 48 connecting the first restricting link 47A and the second restricting link 47B functions as protrusions that protrude from a connecting section between the first restricting link 47A and the second restricting link 47B to both sides in the axial direction of the rotation shaft 48. An upward biasing force is applied to these protrusions by coil springs 50 provided on the first link 42. The coil springs 50 constitute an example of a biasing member, and are provided in a pair on both sides of the first link 42 in the axial direction of the rotation shaft 48 with the restricting link mechanism 45 in between.

The second link 43 supports both ends of the first rotation shaft 46 and the second rotation shaft 49 in the axial direction. The first rotation shaft 46 and the second rotation shaft 49 are disposed side by side in the lengthwise direction of the second link 43. The second end of the second restricting link 47B of the restricting link mechanism 45 is connected, in a rotatable manner, to a central portion of the first rotation shaft 46 in the axial direction. The second ends of the pair of link members 42A, 42B of the first link 42 are connected, in a rotatable manner, to both ends of the second rotation shaft 49 in the axial direction, respectively. A motor 51 for driving the second rotation shaft 49 to rotate is provided at a central portion of the second rotation shaft 49 in the axial direction. The motor 51 is an example of a first drive unit. The motor 51 is provided for each of the pair of link members 42A, 42B.

The second link 43 includes a generally U-shaped bearing, and the bearing supports the wheel 17 in a rotatable manner. The wheel 17 includes disk-shaped flanges 17A on both sides in the width direction to prevent falling off from the longitudinal bars X2, X3. A motor 52 for driving the wheel 17 to rotate is provided on an outer surface of the bearing. That is, the reinforcing bar binding device 10 is provided with the motors 52 for each of the four wheels 17, so that rotation of each wheel 17 can be controlled individually. The motor 52 may be built in each wheel 17.

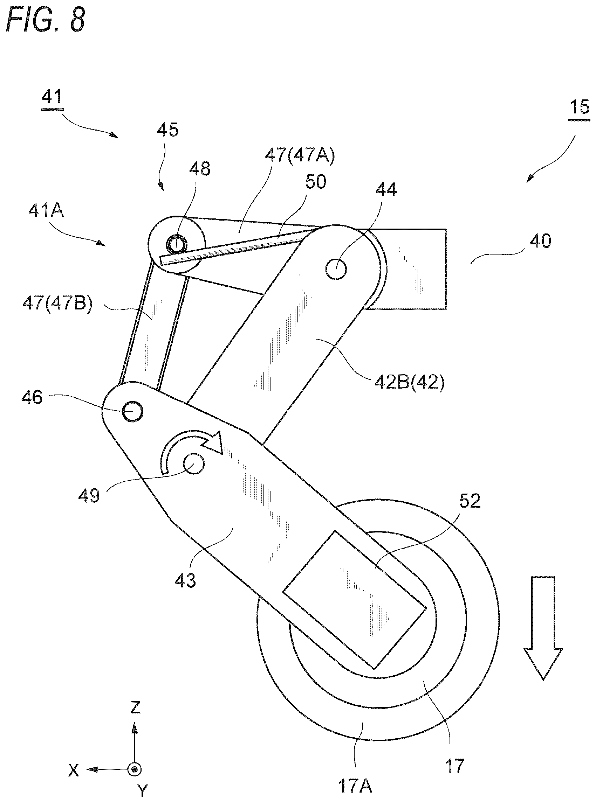

As shown in FIG. 8, when the second rotation shaft 49 is driven by the motor 51 to rotate, the second link 43 rotates relative to the first link 42 around the second rotation shaft 49 in conjunction with the rotation of the second rotation shaft 49. In this example, the second link 43 rotates in the clockwise direction shown in FIG. 8 around the second rotation shaft 49, and the second link 43 rotates relative to the first link 42 so that an angle between the first link 42 and the second link 43 becomes larger. In this case, since the displacement mechanism 41 is configured to displace, with the first end connected to the base 40 as a fixed end and the second end opposite to the first end as a free end, the second rotation shaft 49 moves in the X-axis direction toward the base 40. Here, the displacement direction of the wheel 17 provided at the tip of the displacement mechanism 41 is restricted by the restricting link mechanism 45 of the displacement mechanism 41. Therefore, while being driven by the motor 51, the wheel 17 provided at the tip of the displacement mechanism 41 rises or falls in an upper-lower direction.

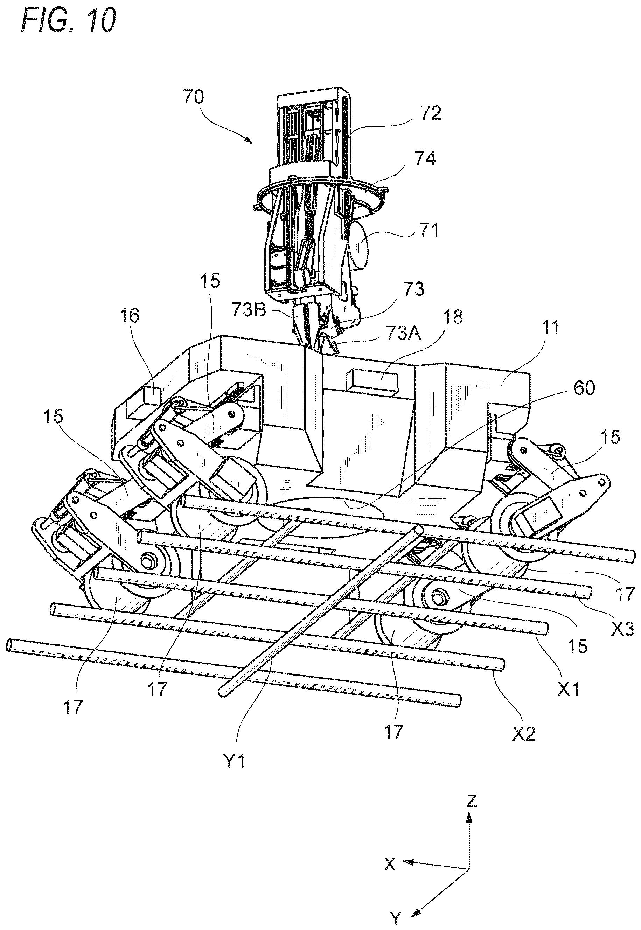

As shown in FIGS. 9 and 10, the main body 11 includes a penetration 60 that penetrates the main body 11 in the Z-axis direction. The penetration 60 opens on an upper surface of the main body 11, and the binding mechanism 70 is inserted from above.

The binding mechanism 70 has a columnar shape and includes a holding unit 71, an elevating unit 72 as an example of an elevating drive unit, and the binding unit 73. The holding unit 71 is provided at a central portion of the binding mechanism 70 in the lengthwise direction. The holding unit 71 holds a roll of wound metal wire. When the reinforcing bar binding device 10 moves to the binding section, the binding unit 73 is lowered by the elevating unit 72 to approach the binding section and performs a binding work using the wire, and then rises to move away from the binding section after the binding work is completed. The binding unit 73 has a configuration in which two arms 73A and 73B cross each other in an approximately V-shape, and with a direction in which the two arms 73A and 73B face each other aligned with a direction that crosses the binding section obliquely, the wire unwound from the holding unit 71 is wound between one arm 73A and the other arm 73B to perform the binding processing on the binding section using the wire. More specifically, the binding unit 73 performs the binding processing on the binding section using the wire by performing operations such as winding the wire around the binding section, winding the wire wound around the binding section in close contact with the binding section, and twisting the wire wound around the binding section.

The binding mechanism 70 includes a disk-shaped engagement portion 74. A shape of the engagement portion 74 in a plan view is larger than an opening shape of the penetration 60. Therefore, when the binding mechanism 70 is inserted into the penetration 60, the engagement portion 74 engages with an opening edge of the penetration 60 in the Z-axis direction, thereby positioning the binding mechanism 70. In this case, the binding mechanism 70 is provided with the binding unit 73 on one side in the lengthwise direction with the engagement portion 74 as a reference (in this example, a lower side).

The main body 11 is provided with the elevating unit 72 that raises and lowers the binding unit 73 in the Z-axis direction. Then, when the reinforcing bar binding device 10 reaches a binding position, in addition to the extension and retraction of each leg 15 of the main body 11, the elevating unit 72 raises and lowers the binding unit 73 in the Z-axis direction, thereby precisely lowering the binding unit 73 of the binding mechanism 70 to the binding section and accurately performing the binding processing on the binding section using the wire.

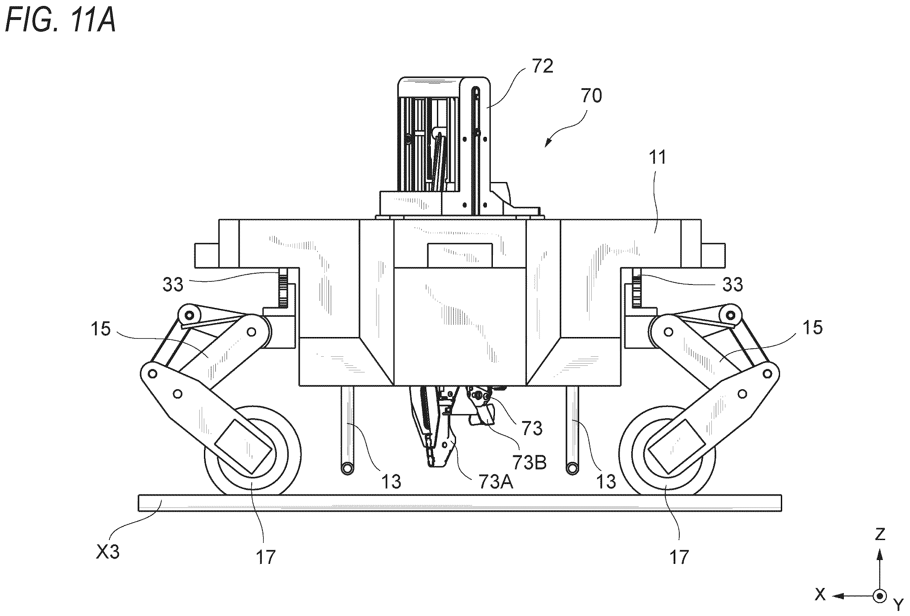

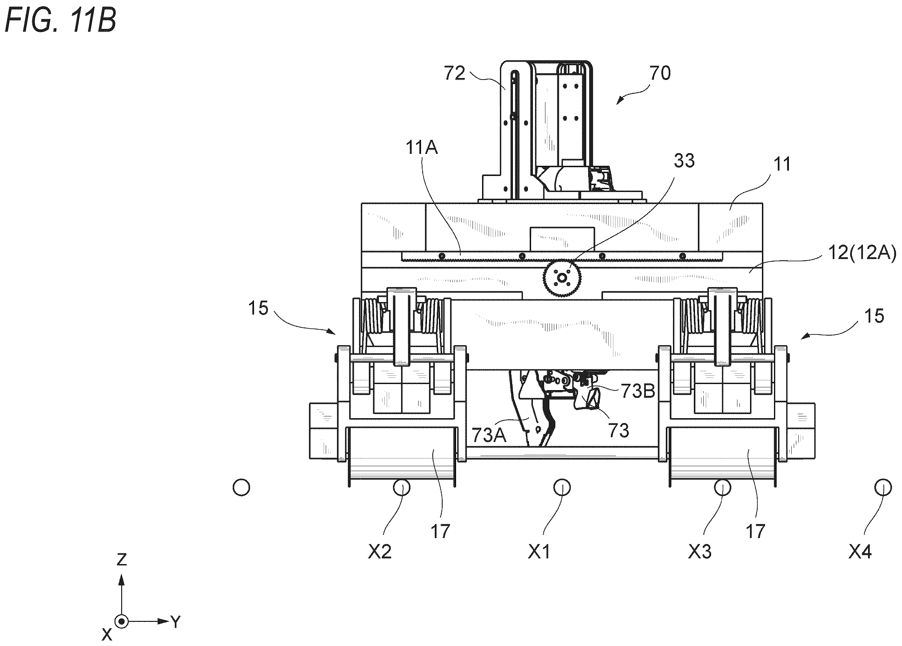

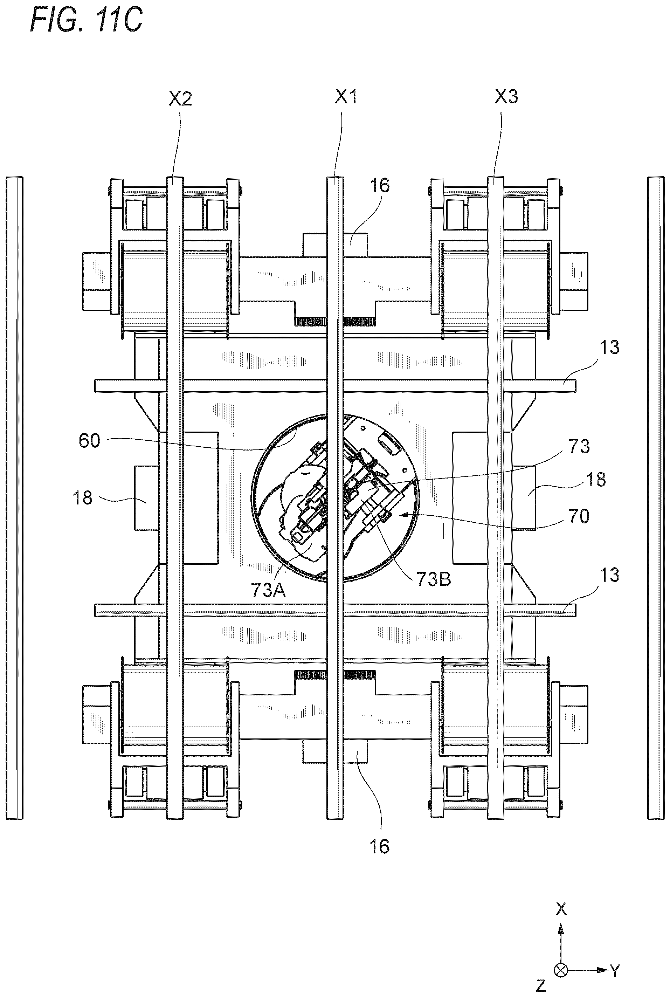

As shown in FIGS. 11A and 11B, when the binding mechanism 70 is inserted into the main body 11, the binding unit 73 of the binding mechanism 70 protrudes downward from the lower surface of the main body 11. The reinforcing bar binding device 10 then travels following the longitudinal bar X1. In this case, the binding unit 73 of the binding mechanism 70 is disposed above and away from the longitudinal bar X1. As shown in FIG. 11C, the two arms 73A and 73B of the binding unit 73 face each other in a direction that intersects obliquely with the lengthwise direction of the longitudinal bar X1.

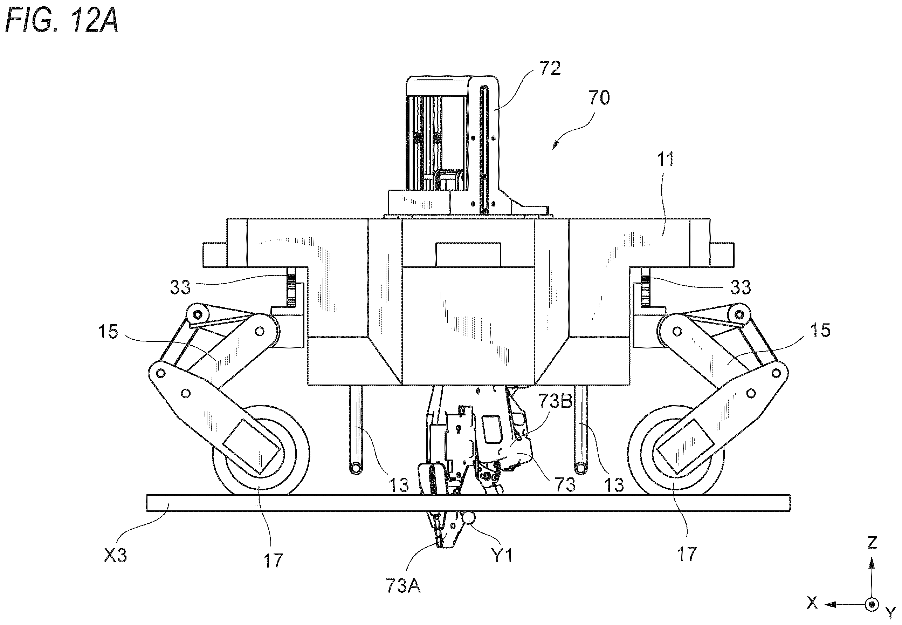

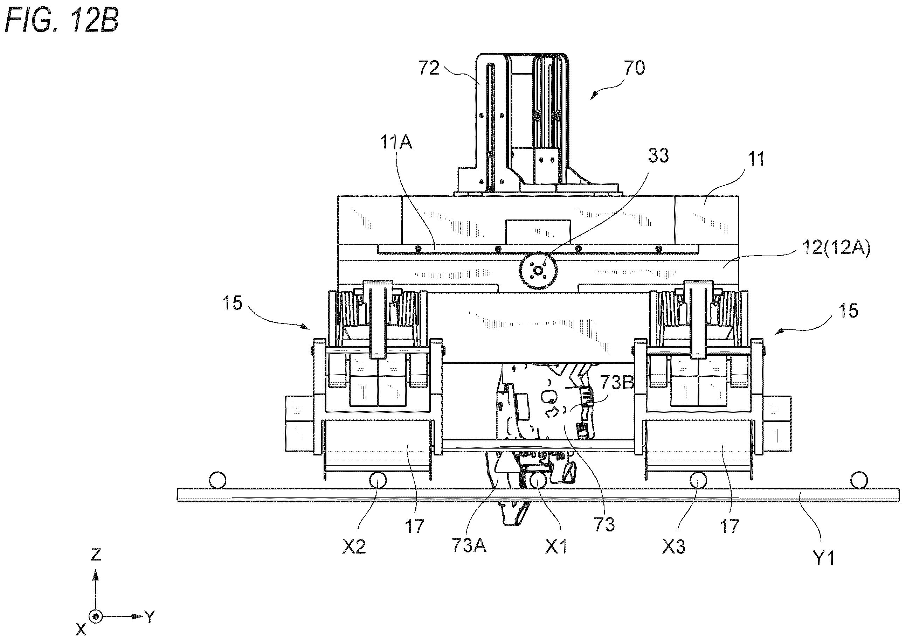

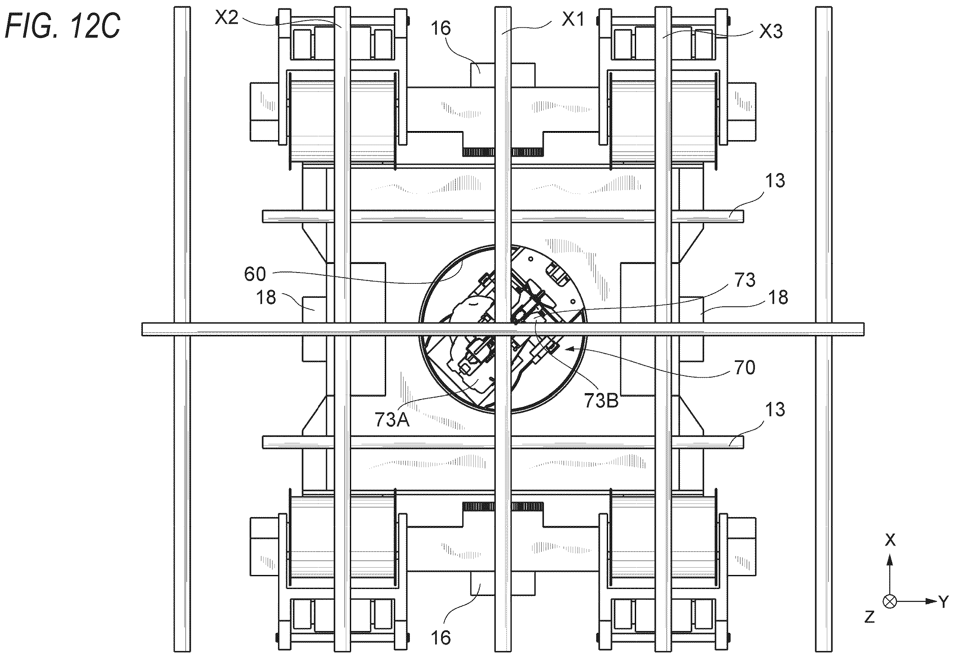

Then, as shown in FIGS. 12A and 12B, the reinforcing bar binding device 10 travels following the longitudinal bar X1, and when the reinforcing bar binding device 10 reaches a position opposite to the lateral bar in the Z-axis direction, the binding unit 73 of the binding mechanism 70 is lowered to a position where a distance from the longitudinal bar or the lateral bar becomes a predetermined distance as each leg 15 of the main body 11 extends and retracts. When the binding unit 73 of the binding mechanism 70 reaches the binding section, the binding mechanism 70 is raised and lowered in the Z-axis direction relative to the main body 11, so that the binding unit 73 of the binding mechanism 70 is aligned with the binding section in the Z-axis direction. In this case, as shown in FIG. 12C, the two arms 73A and 73B of the binding unit 73 face each other in a direction that crosses the binding section obliquely. The binding unit 73 then winds the wire around from one arm 73A to the other arm 73B, thereby performing the binding processing on the binding section using the wire.

The binding mechanism 70 is configured to rotate in a circumferential direction around a rotation axis passing through a center of the opening of the penetration 60 when inserted into the penetration 60. In this case, the binding mechanism 70 may be rotated manually, or may be rotated based on a driving force from a motor, which is an example of a rotation drive unit. When the binding mechanism 70 rotates in the circumferential direction around the rotation axis, an orientation of the two arms 73A and 73B of the binding unit 73 is changed. Therefore, the binding mechanism 70 can use the wire to perform the binding processing on the binding section not only when the longitudinal bar and the lateral bar intersect with each other at a right angle, but also when the longitudinal bar and the lateral bar intersect with each other obliquely.

Next, a control configuration of the reinforcing bar binding device 10 of the present embodiment will be described.

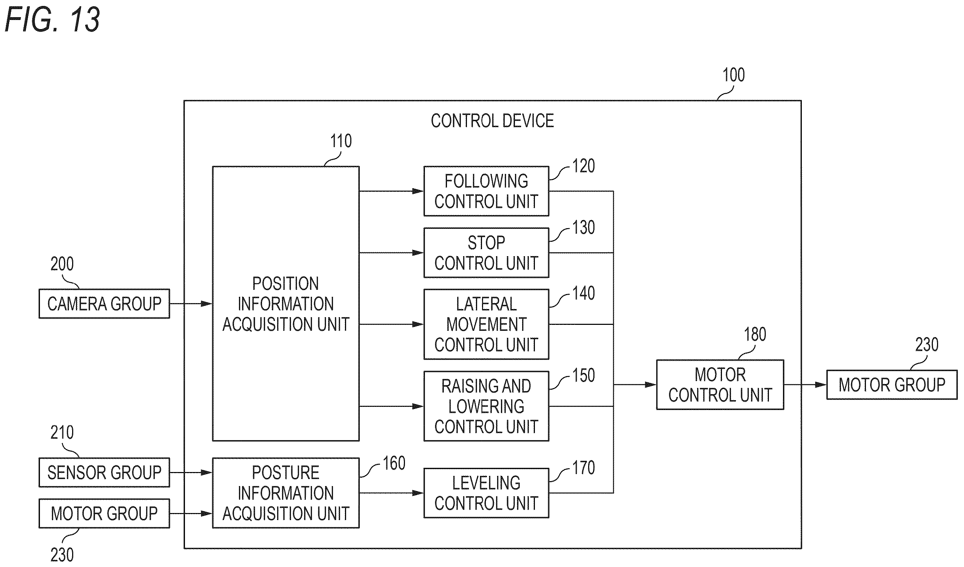

As shown in FIG. 13, the control device 100 of the reinforcing bar binding device 10 is implemented by, for example, a hardware processor such as a central processing unit (CPU) executing a program (software). Furthermore, some or all of these components may be implemented by hardware (including circuitry) such as a large scale integration (LSI), an application specific integrated circuit (ASIC), a field-programmable gate array (FPGA), or a graphics processing unit (GPU), or may be implemented by a combination of software and hardware. The program may be stored in advance in a computer-readable recording device such as an HDD or a flash memory of the control device 100, or may be stored in a removable computer-readable recording medium such as a DVD or a CD-ROM, and installed in the HDD or the flash memory of the control device 100 by inserting the computer-readable recording medium into a drive device.

The control device 100 includes, for example, a position information acquisition unit 110, a posture information acquisition unit 160, a following control unit 120, a stop control unit 130, a lateral movement control unit 140, an elevating control unit 150, a leveling control unit 170, and a motor control unit 180.

The position information acquisition unit 110 acquires information related to the position of the reinforcing bar binding device 10 based on information acquired from a camera group 200. The camera group 200 includes, for example, sensors 16 provided on both sides of the reinforcing bar binding device 10 in the X-axis direction, and sensors 18 provided on both sides of the reinforcing bar binding device 10 in the Y-axis direction. The information related to the position of the reinforcing bar binding device 10 includes, for example, information related to the lengthwise direction of the longitudinal bar and information related to the lengthwise direction of the lateral bar specified by the camera group 200.

The following control unit 120 controls traveling of the reinforcing bar binding device 10 so as to follow the longitudinal bar, based on the information related to the position of the reinforcing bar binding device 10 acquired by the position information acquisition unit 110. The following control unit 120 controls the traveling of the reinforcing bar binding device 10 so that a movement direction of the reinforcing bar binding device 10 aligns with the lengthwise direction of the longitudinal bar based on, for example, the information related to the lengthwise direction of the longitudinal bar acquired by the position information acquisition unit 110. The following control unit 120 determines a control amount for a motor group 230 by the motor control unit 180 so as to align the movement direction of the reinforcing bar binding device 10 with the lengthwise direction of the longitudinal bar, for example. In this case, the motor group 230 includes, for example, the motor 52 that controls the rotation of each wheel 17. The following control unit 120 measures a load of the motor 52 that drives the reinforcing bar binding device 10 to move along the lengthwise direction of the longitudinal bar. The following control unit 120 is an example of a second measurement unit.

When the reinforcing bar binding device 10 moves forward, for the legs 15 positioned at a front side of the reinforcing bar binding device 10 among the plurality of legs 15 constituting the leg structure 12, the following control unit 120 drives the motor 51 that controls the extension and retraction of each leg 15 so that a connection section between the first link 42 positioned at the first end and the second link 43 positioned at the second end is disposed at the front side of the reinforcing bar binding device 10 in the displacement mechanism 41. The following control unit 120 then determines whether the reinforcing bar binding device 10 collides with an obstacle based on a change in the load of the motor that moves the reinforcing bar binding device 10 forward. The following control unit 120 is an example of a first determination unit.

The stop control unit 130 controls the traveling of the reinforcing bar binding device 10 so as to stop reinforcing bar binding device 10 at the binding section where the longitudinal bar and the lateral bar intersect with each other, based on the information related to the position of the reinforcing bar binding device 10 acquired by the position information acquisition unit 110. The stop control unit 130, for example, specifies the position where the lengthwise direction of the longitudinal bar and the lengthwise direction of the lateral bar specified by the camera group 200 intersect with each other as the binding section where the longitudinal bar and the lateral bar intersect with each other, and stops the movement of the reinforcing bar binding device 10 at the position of the specified binding section. The stop control unit 130 determines the control amount for the motor group 230 by the motor control unit 180 so as to stop the movement of the reinforcing bar binding device 10 at the binding section where the longitudinal bar and the lateral bar intersect with each other, for example. In this case, the motor group 230 includes, for example, the motor 52 that controls the rotation of each wheel 17.

The lateral movement control unit 140 is an example of a control unit, and controls the lateral movement of the reinforcing bar binding device 10 based on the information related to the position of the reinforcing bar binding device 10 acquired by the position information acquisition unit 110, for example. The lateral movement control unit 140 is an example of a movement amount calculation unit, and calculates a movement amount of the main body 11 in the lateral direction based on the information related to the position of the reinforcing bar binding device 10 acquired by the position information acquisition unit 110, for example. For example, when it is detected that the reinforcing bar binding device 10 reaches an end of the longitudinal bar in the lengthwise direction based on the information related to the position of the reinforcing bar binding device 10 acquired by the position information acquisition unit 110, the lateral movement control unit 140 executes lateral movement processing of the reinforcing bar binding device 10 so as to change the longitudinal bar on which each wheel 17 of the reinforcing bar binding device 10 is placed to an adjacent longitudinal bar in the Y-axis direction. The lateral movement control unit 140 determines the control amount for the motor group 230 by the motor control unit 180 in each step of the lateral movement processing, for example. In this case, the motor group 230 includes, for example, the motor 52 that controls the rotation of each wheel 17, the motor 51 that controls the extension and retraction of each leg 15, and the motor that causes the main body 11 and the leg structure 12 to perform lateral movement.

The lateral movement control unit 140 measures a load of the motor that drives the lateral movement roller 33 when the reinforcing bar binding device 10 moves to the adjacent longitudinal bar in the Y-axis direction, and determines whether the lateral movement processing of the reinforcing bar binding device 10 is normally performed based on a change in the measured load of the motor. The lateral movement control unit 140 is an example of a second determination unit. For example, when the measured load of the motor is equal to or greater than a predetermined threshold, the lateral movement control unit 140 determines that the lateral movement processing of the reinforcing bar binding device 10 is not normally performed, such as when the wheel 17 provided at the tip of the leg 15 collides with the longitudinal bar X2 or X3. For example, when it is determined that the lateral movement processing of the reinforcing bar binding device 10 is not normally performed, the lateral movement control unit 140 controls the driving of the motor 51 that extends and retracts each leg 15 so as to move the wheel 17 away from the longitudinal bars X2, X3.

The elevating control unit 150 controls raising and lowering of the binding mechanism 70 based on the information related to the position of the reinforcing bar binding device 10 acquired by the position information acquisition unit 110. The elevating control unit 150 controls the raising and lowering of the binding mechanism 70 so as to lower the binding mechanism 70, for example, when the reinforcing bar binding device 10 reaches the binding section where the longitudinal bar and the lateral bar intersect with each other. The elevating control unit 150 determines the control amount for the motor group 230 by the motor control unit 180 so as to lower the binding mechanism 70, for example. In this case, the motor group 230 includes the motor that raises and lowers the binding mechanism 70.

The posture information acquisition unit 160 acquires information related to a posture of the reinforcing bar binding device 10 based on information acquired from a sensor group 210 and the motor group 230. The posture information acquisition unit 160 acquires, for example, information related to the motor load of the motor that controls the extension and retraction of each leg 15 as the information related to the posture of the reinforcing bar binding device 10, and determines a leveling level of the main body 11 based on the acquired information related to the motor load. In this case, the sensor group 210 includes, for example, a sensor that measures the motor load of the motor that controls the extension and retraction of each leg 15 and an inclination detection sensor such as a gyro sensor that detects an inclination of the posture of the reinforcing bar binding device 10. The motor group 230 includes, for example, the motor 51 that controls the extension and retraction of each leg 15.

The leveling control unit 170 is an example of the control unit, and controls the posture of the reinforcing bar binding device 10 so as to maintain a level posture, for example, based on the information related to the posture of the reinforcing bar binding device 10 acquired by the posture information acquisition unit 160. The leveling control unit 170, for example, measures the motor load of the motor 51 that controls the extension and retraction of each leg 15, and determines the control amount for the motor group 230 by the motor control unit 180 so that a total value of the measured motor loads of the motors 51 is minimized. In this case, the motor group 230 includes the motor 51 that controls the extension and retraction of each leg 15.

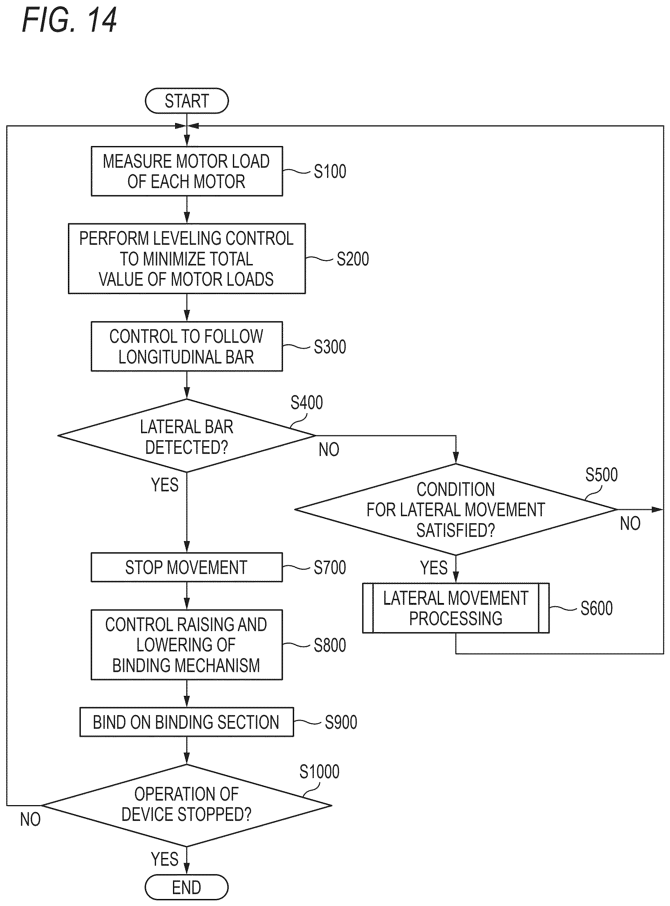

Next, the binding processing executed by the reinforcing bar binding device 10 of the present embodiment will be described. FIG. 14 is a flowchart showing an example of the binding processing. The flowchart shown in FIG. 14 is executed, for example, when an operation of the reinforcing bar binding device 10 is started.

As shown in FIG. 14, the control device 100 first measures the motor load of the motor 51 that extends and retracts each leg 15 of the leg structure 12 (step S100).

Next, the control device 100 sets a drive amount for the motor 51 that extends and retracts each leg 15 so that the total value of the motor loads of each motor measured in the previous step S100 is minimized, and controls the posture of the reinforcing bar binding device 10 to maintain a level posture (step S200).

Next, the control device 100 specifies the lengthwise direction of the longitudinal bar X1 using the sensors 16 provided on both sides of the main body 11 in the X-axis direction, and sets a drive amount for the motor 52 that rotates each wheel 17 based on the specified lengthwise direction of the longitudinal bar X1, and causes the reinforcing bar binding device 10 to travel in a manner of following the longitudinal bar X1 (step S300).

Next, the control device 100 determines whether a lateral bar is detected by the sensors 18 provided on both sides of the main body 11 in the Y-axis direction (step S400).

If it is determined in the previous step S400 that no lateral bar is detected (step S400 = NO), the control device 100 determines whether a condition for lateral movement is satisfied (step S500). The condition for lateral movement is satisfied when, for example, the reinforcing bar binding device 10 reaches an end of the longitudinal bar X1 in the X-axis direction, or an obstacle is detected ahead in the advancing direction of the reinforcing bar binding device 10.

If it is determined in the previous step S500 that the condition for lateral movement is not satisfied (step S500 = NO), the control device 100 returns the processing to step S100. On the other hand, if it is determined in the previous step S500 that the condition for lateral movement is satisfied (step S500 = YES), the control device 100 executes the lateral movement processing of the reinforcing bar binding device 10 (step S600).

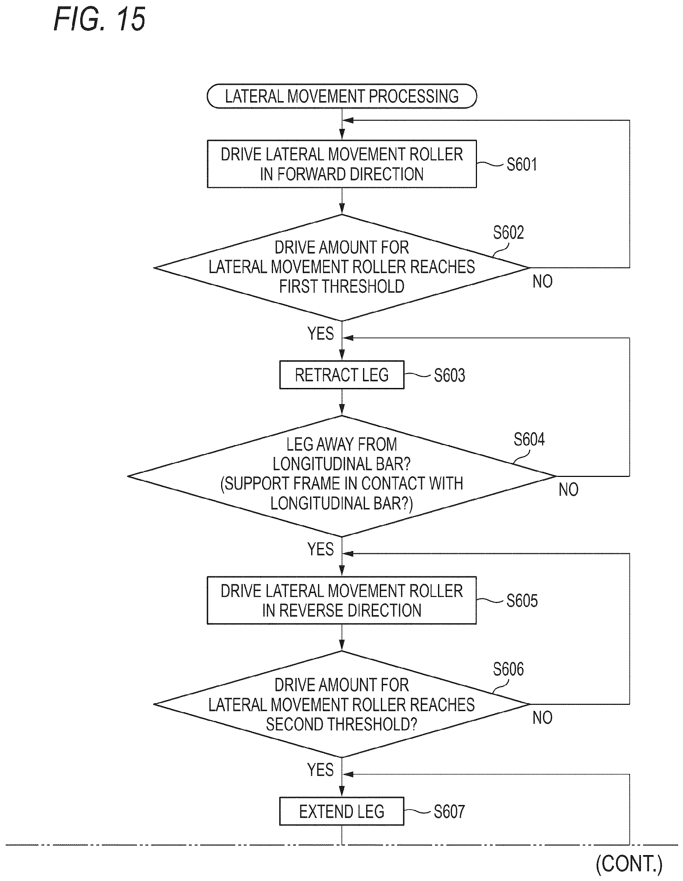

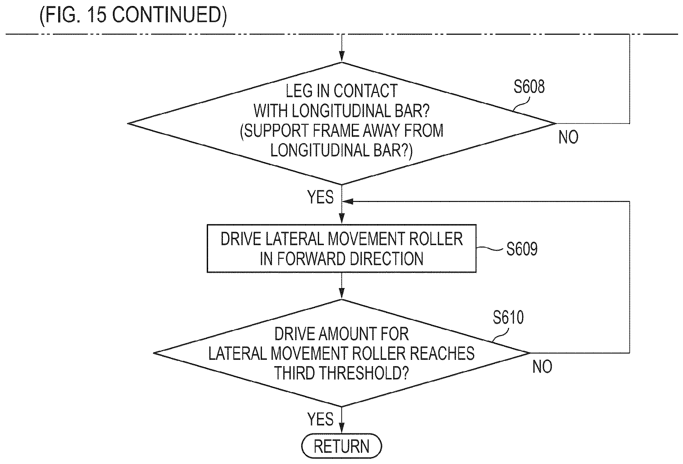

As shown in FIG. 15, in the lateral movement processing of the reinforcing bar binding device 10, the control device 100 first drives the lateral movement roller 33 in a forward direction, which is a first drive direction, and moves the main body 11 in the Y-axis direction relative to the leg structure 12 while supporting the leg structure 12 by bringing each leg 15 constituting the leg structure 12 into contact with the longitudinal bar X1 (step S601).

Next, the control device 100 determines whether the drive amount for the lateral movement roller 33 that is driven in the forward direction in the previous step S601 reaches a first threshold (step S602).

If it is determined that the drive amount for the lateral movement roller 33 does not reach the first threshold (step S602 = NO), the control device 100 returns the processing to step S603. On the other hand, if it is determined that the drive amount for the lateral movement roller 33 reaches the first threshold (step S602 = YES), the control device 100 drives the motor 51 that extends and retracts each leg 15 constituting the leg structure 12, thereby retracting each leg 15 and lowering the height of the main body 11 (step S603).

Next, the control device 100 determines whether each leg 15 is away from the longitudinal bars X2, X3 (whether the support frame 13 is in contact with the longitudinal bars X1, X3) based on the drive amount for the motor 51 that extends and retracts each leg 15 constituting the leg structure 12 (step S604).

When it is determined that not each leg 15 is away from the longitudinal bars X2, X3 (step S604 = NO), the control device 100 returns the processing to step S603. On the other hand, if it is determined that each leg 15 is away from the longitudinal bars X2, X3 (step S604 = YES), the control device 100 drives the lateral movement roller 33 in a reverse direction, which is a second drive direction, and moves the leg structure 12 in the Y-axis direction relative to the main body 11 while supporting the main body 11 by bringing the support frame 13 into contact with the longitudinal bars X1, X3 (step S605).

Next, the control device 100 determines whether the drive amount for the lateral movement roller 33 that is driven in the reverse direction in the previous step S605 reaches a second threshold (step S606).

If it is determined that the drive amount for the lateral movement roller 33 does not reach the second threshold (step S606 = NO), the control device 100 returns the processing to step S605. On the other hand, if it is determined that the drive amount for the lateral movement roller 33 reaches the second threshold (step S606 = YES), the control device 100 drives the motor 51 that extends and retracts each leg 15 constituting the leg structure 12, thereby extending each leg 15 (step S607).

Next, the control device 100 determines whether the support frame 13 connected to the main body 11 is away from the longitudinal bars X1, X3 (whether each leg 15 is in contact with the longitudinal bars X1, X4) based on the drive amount for the motor 51 that extends and retracts each leg 15 constituting the leg structure 12 (step S608).

If it is determined that not each leg 15 is in contact with the longitudinal bars X1, X4 (step S608 = NO), the control device 100 returns the processing to step S607. On the other hand, if it is determined that each leg 15 is in contact with the longitudinal bars X1, X4 (step S608 = YES), the control device 100 drives the lateral movement roller 33 in the forward direction, and moves the main body 11 in the Y-axis direction relative to the leg structure 12 while supporting the leg structure 12 by bringing each leg 15 constituting the leg structure 12 into contact with the longitudinal bars X1, X4 (step S609).

Next, the control device 100 determines whether the drive amount for the lateral movement roller 33 that is driven in the forward direction in the previous step S609 reaches a third threshold (step S610).

If it is determined that the drive amount for the lateral movement roller 33 does not reach the third threshold (step S610 = NO), the control device 100 returns the processing to step S609. On the other hand, if it is determined that the drive amount for the lateral movement roller 33 reaches the third threshold (step S610 = YES), the control device 100 ends the lateral movement processing shown in FIG. 15.

With reference to FIG. 14 again, when the control device 100 executes the lateral movement processing of the reinforcing bar binding device 10 in the previous step S600, the control device 100 returns the processing to step S100.

If it is determined that the lateral bar Y1 is detected in the previous step S400 (step S400 = YES), the control device 100 stops driving the motor 52 that rotates each wheel 17 and stops the movement of the reinforcing bar binding device 10 (step S700).

Next, the control device 100 controls the elevating unit 72 to raise and lower the binding unit 73 of the binding mechanism 70 relative to the main body 11, and adjusts the position of the binding mechanism 70 in the Z-axis direction relative to the binding section where the longitudinal bar X3 and the lateral bar Y1 intersect with each other (step S800).

Next, the control device 100 controls the operation of the binding mechanism 70, the position of which in the Z-axis direction is controlled, to bind the binding section (step S900).

Next, the control device 100 determines whether the operation of the reinforcing bar binding device 10 is stopped (step S1000). If it is determined that the operation of the reinforcing bar binding device 10 is not stopped (step S1000 = NO), the control device 100 returns the processing to step S100 and repeats the processing of steps S100 to S900 until the operation of the reinforcing bar binding device 10 is stopped. On the other hand, if it is determined that the operation of the reinforcing bar binding device 10 is stopped (step S1000 = YES), the control device 100 ends the flowchart shown in FIG. 14.

Next, an operation of the reinforcing bar binding device 10 of the present embodiment when performing the lateral movement processing will be described.

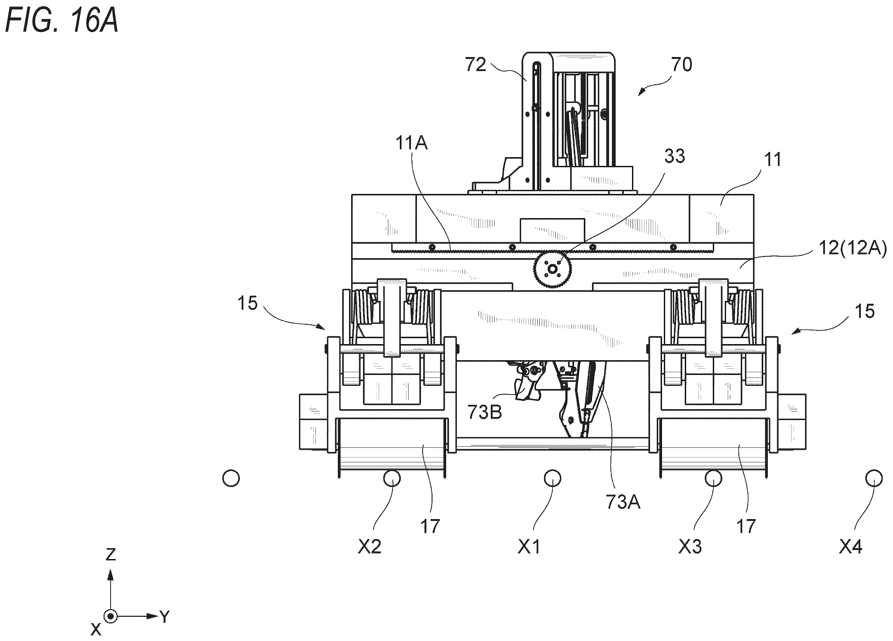

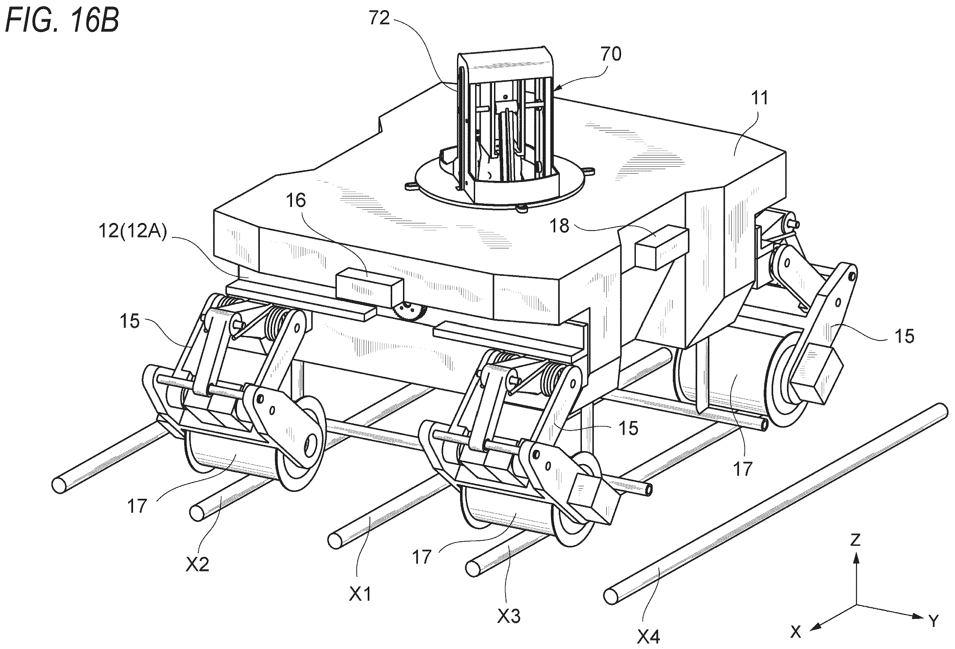

In the example shown in FIGS. 16A and 16B, in the reinforcing bar binding device 10, the wheel 17 of each leg 15 constituting the leg structure 12 is placed on the longitudinal bars X2, X3, and the leg structure 12 is supported by the longitudinal bars X2, X3. In this case, the support frame 13 connected to the main body 11 is above and away from the longitudinal bars X1, X2, X3.

Here, when the reinforcing bar binding device 10 executes the lateral movement processing, first, the position of the longitudinal bar X4 adjacent, in the Y-axis direction, to the longitudinal bar X3 on which the reinforcing bar binding device 10 is traveling is detected by the sensors 18 provided on both sides of the main body 11 in the Y-axis direction. Then, the reinforcing bar binding device 10 measures a distance in the Y-axis direction between the longitudinal bar X3 on which the wheel 17 of each leg 15 constituting the leg structure 12 is placed and the longitudinal bar X4 detected as described above. The reinforcing bar binding device 10 determines the movement amount of the main body 11 or the leg structure 12 in the Y-axis direction in each processing described below based on the measured distance. When the reinforcing bar binding device 10 executes the lateral movement processing, first, the position of the longitudinal bar X4 adjacent, in the Y-axis direction, to the longitudinal bar X3 on which the reinforcing bar binding device 10 is traveling may be calculated by the sensors 18 provided on both sides of the main body 11 in the Y-axis direction. The movement amount of the main body 11 or the leg structure 12 in the Y-axis direction is calculated based on information related to a distance in the Y-axis direction from a center position of the reinforcing bar binding device 10 (a position of the binding mechanism 70, which is a position of the longitudinal bar X1 detected by the sensor 16) to the positions of the sensors 18, and information related to a distance in the Y-axis direction from the positions of the sensors 18 to a position of the longitudinal bar X3. For example, when the sensor 18 is mounted at a position "100" away from the center position of the reinforcing bar binding device 10 (the position of longitudinal bar X1) and the longitudinal bar X3 is at a position "20" away from the sensor 18 and close to the reinforcing bar binding device 10 (a position close to the longitudinal bar X1), the reinforcing bar binding device 10 controls the movement amount of the main body 11 or leg structure 12 in the Y-axis direction in each processing described below to be "80". For example, when the sensor 18 is mounted at a position "100" away from the center position of the reinforcing bar binding device 10 (the position of longitudinal bar X1) and the longitudinal bar X3 is at a position "20" away from the sensor 18 and far from the reinforcing bar binding device 10 (a position far from the longitudinal bar X1), the reinforcing bar binding device 10 controls the movement amount of the main body 11 or leg structure 12 in the Y-axis direction in each processing described below to be "120". When the positions of the sensors 18 are fixed, the information related to the distance in the Y-axis direction from the center position of the reinforcing bar binding device 10 to the positions of the sensors 18 may be stored in advance in a memory as initial information. The information related to the distance in the Y-axis direction from the positions of the sensors 18 to the position of the longitudinal bar X3 may be calculated from the position of the longitudinal bar X3 detected by the sensors 18.

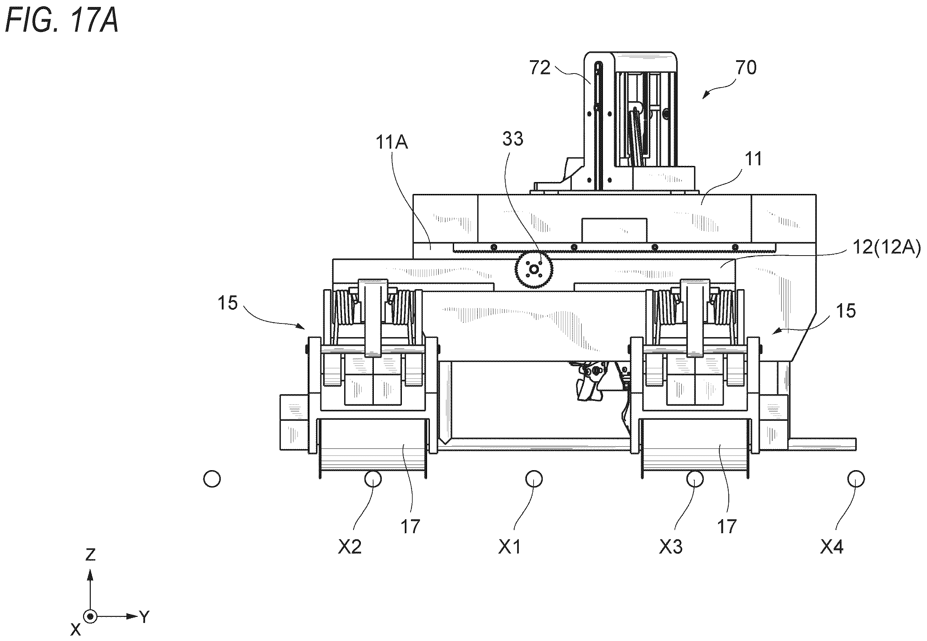

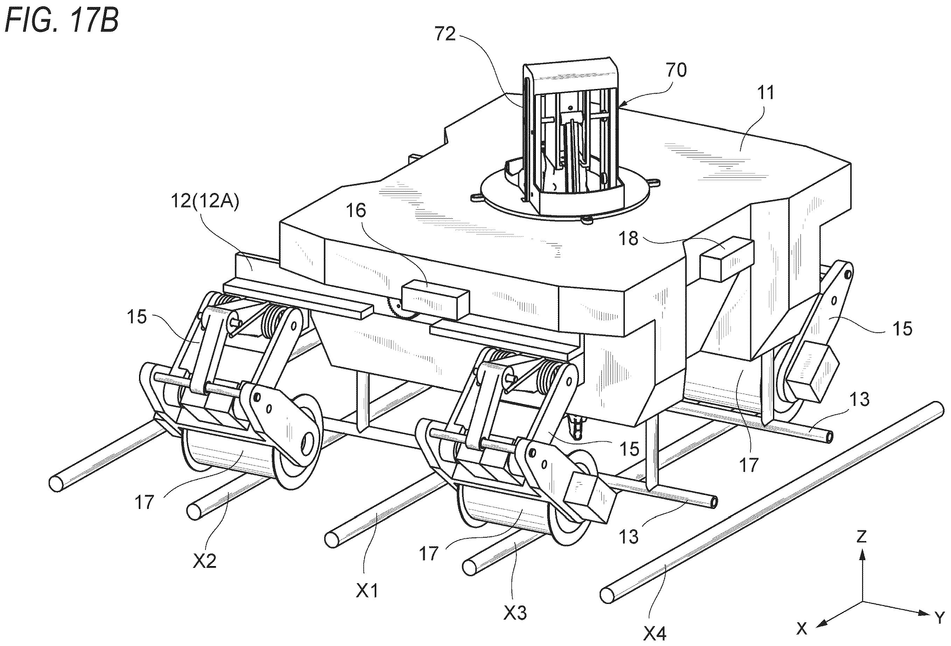

That is, as shown in FIGS. 17A and 17B, the reinforcing bar binding device 10 first drives the lateral movement roller 33 in the forward direction, and moves the main body 11 in the Y-axis direction relative to the leg structure 12 while supporting the leg structure 12 by bringing each leg 15 constituting the leg structure 12 into contact with the longitudinal bars X2, X3. As a result, the main body 11 approaches the longitudinal bar X4 adjacent in the Y-axis direction to the longitudinal bar X3 on which the legs 15 are placed.

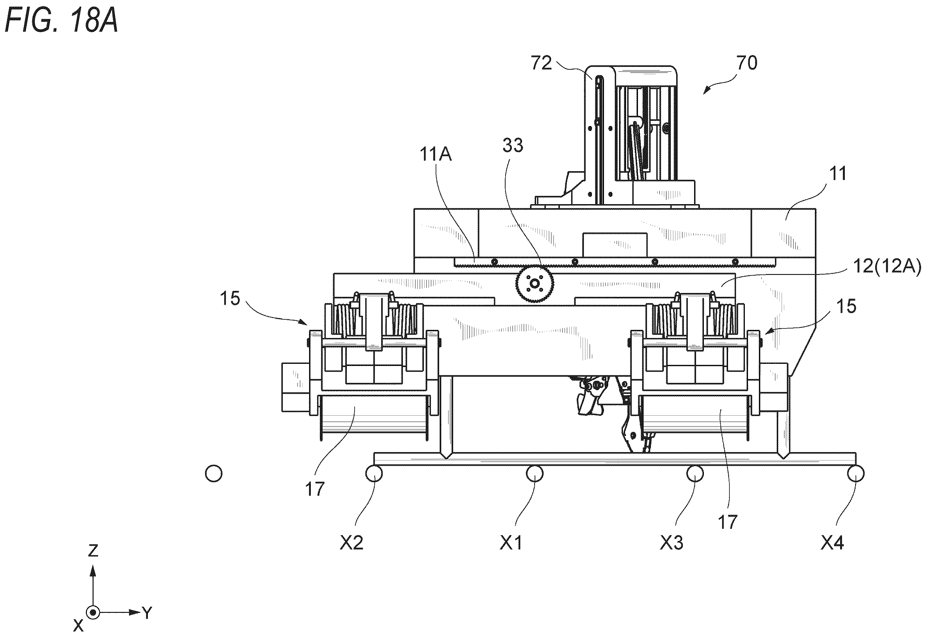

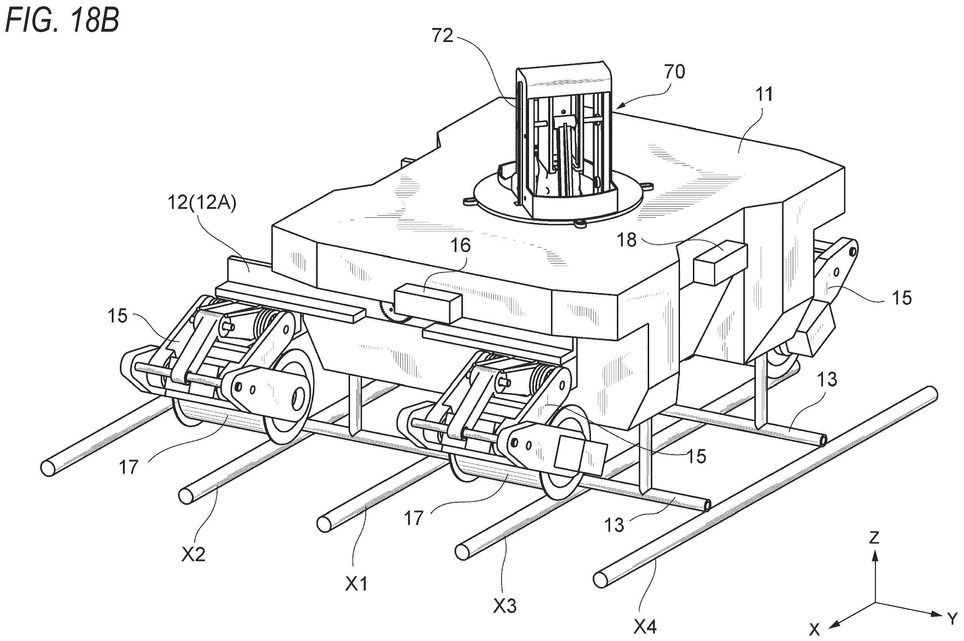

Next, as shown in FIGS. 18A and 18B, the reinforcing bar binding device 10 retracts each leg 15 constituting the leg structure 12, thereby lowering the height of the main body 11 relative to the longitudinal bars X1, X3. Then, the reinforcing bar binding device 10 brings the support frame 13 connected to the main body 11 into contact with the longitudinal bars X1, X3. In this case, the support frame 13 is placed so as to straddle two longitudinal bars X1, X3, including the longitudinal bar X1 on which the reinforcing bar binding device 10 is traveling and the longitudinal bar X3 adjacent to the longitudinal bar X1 in the Y-axis direction. When the reinforcing bar binding device 10 further retracts each leg 15 constituting the leg structure 12 from the state in which the support frame 13 is in contact with the longitudinal bars X1, X3, each leg 15 moves away from the longitudinal bars X2, X3 (corresponding to first processing).

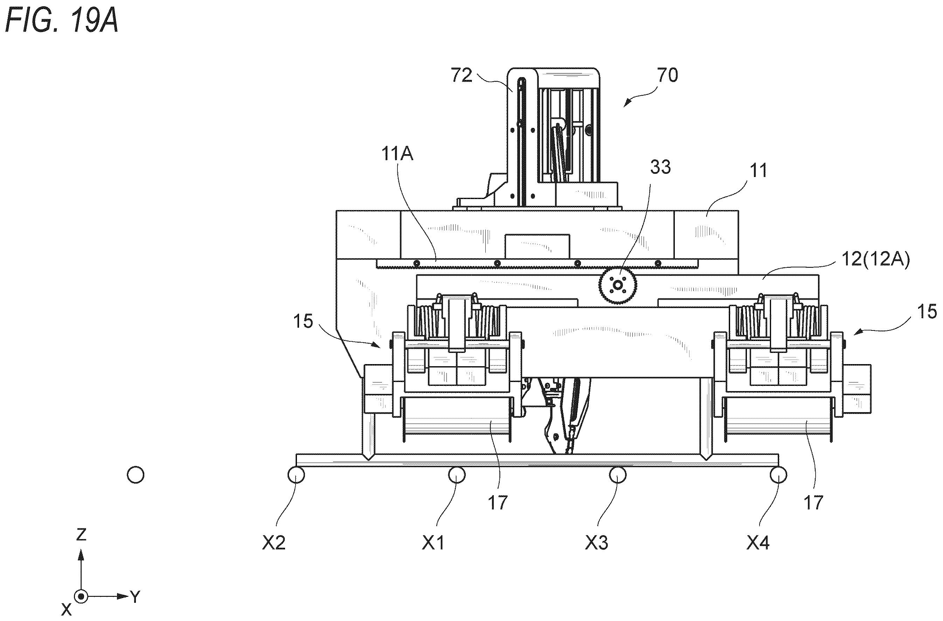

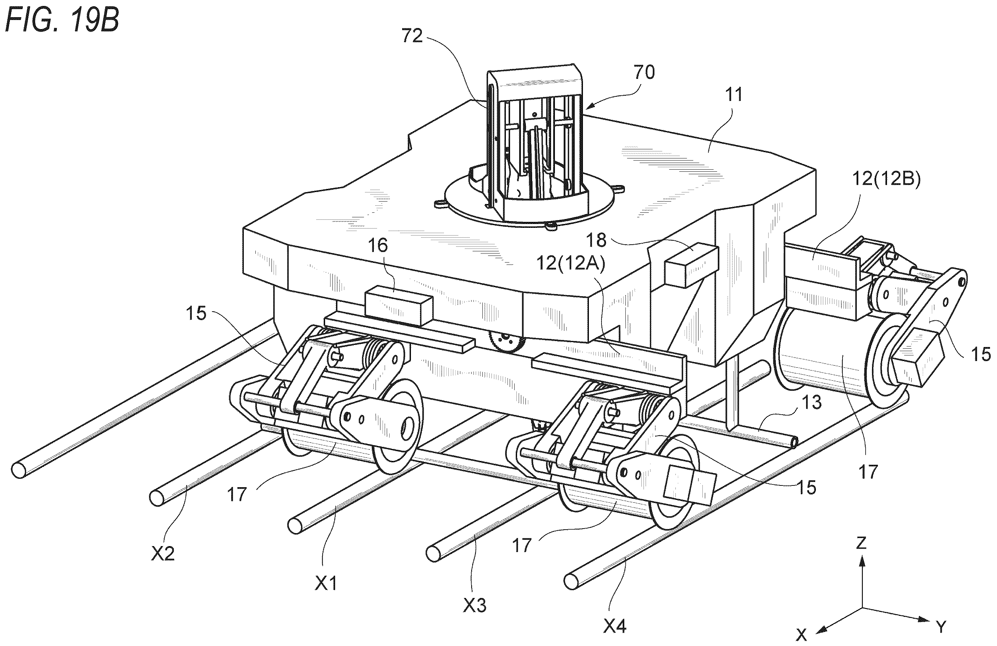

Next, as shown in FIGS. 19A and 19B, the reinforcing bar binding device 10 drives the lateral movement roller 33 in the reverse direction, and moves the leg structure 12 in the Y-axis direction relative to the main body 11 while supporting the main body 11 by bringing the support frame 13 into contact with the longitudinal bars X3, X4 (corresponding to second processing). As a result, each leg 15 constituting the leg structure 12 is disposed so as to face the longitudinal bars X1, X4 in the Z-axis direction.

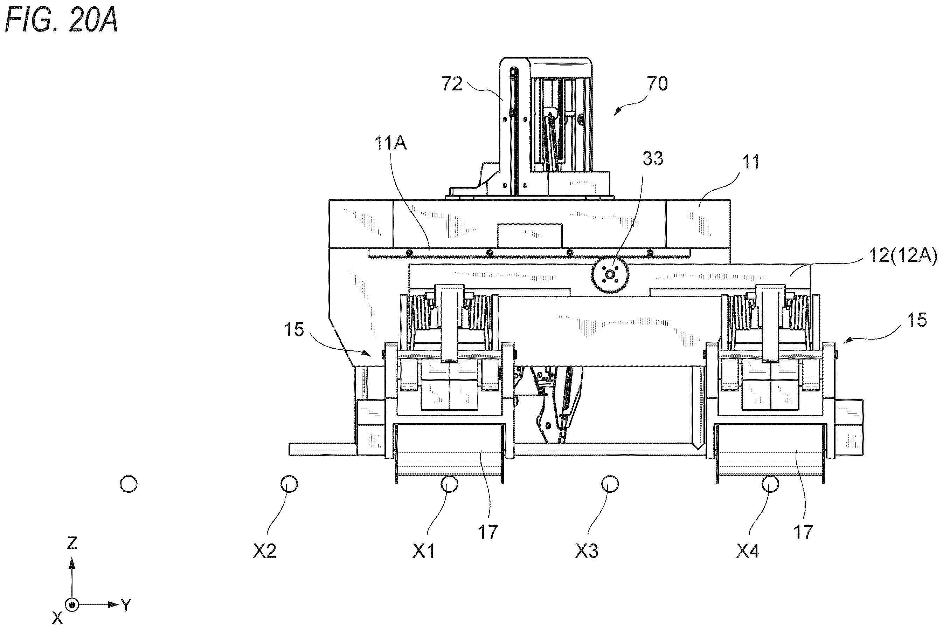

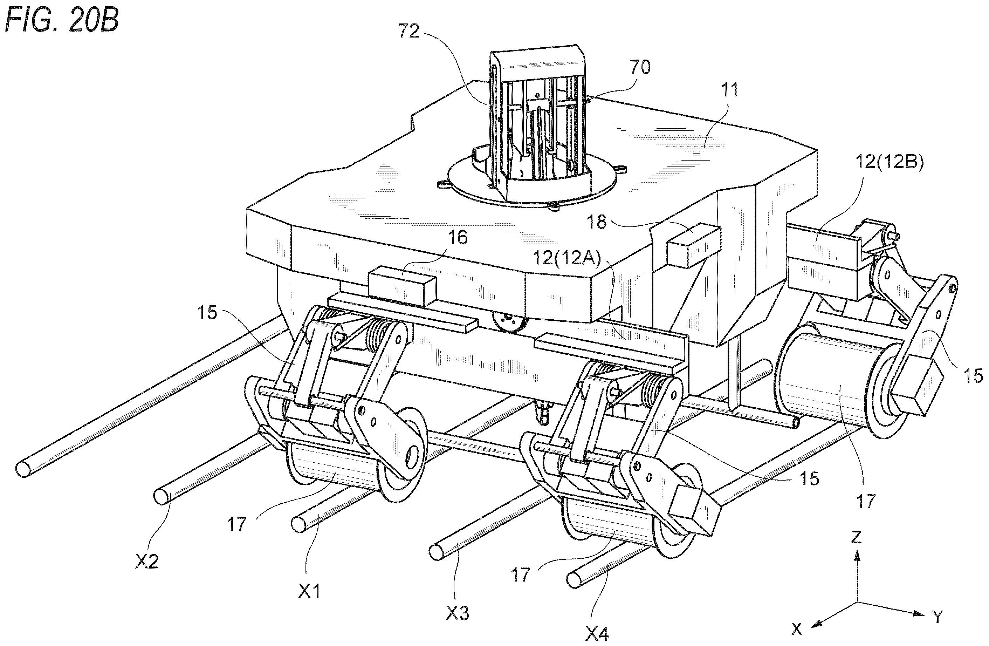

Next, as shown in FIGS. 20A and 20B, the reinforcing bar binding device 10 extends each leg 15 constituting the leg structure 12 and brings each leg 15 into contact with the longitudinal bars X1, X4 (corresponding to third processing). Then, when the reinforcing bar binding device 10 further extends each leg 15 constituting the leg structure 12 from the state in which each leg 15 is in contact with the longitudinal bars X1, X4, the support frame 13 connected to the main body 11 moves upward away from the longitudinal bars X3, X4.

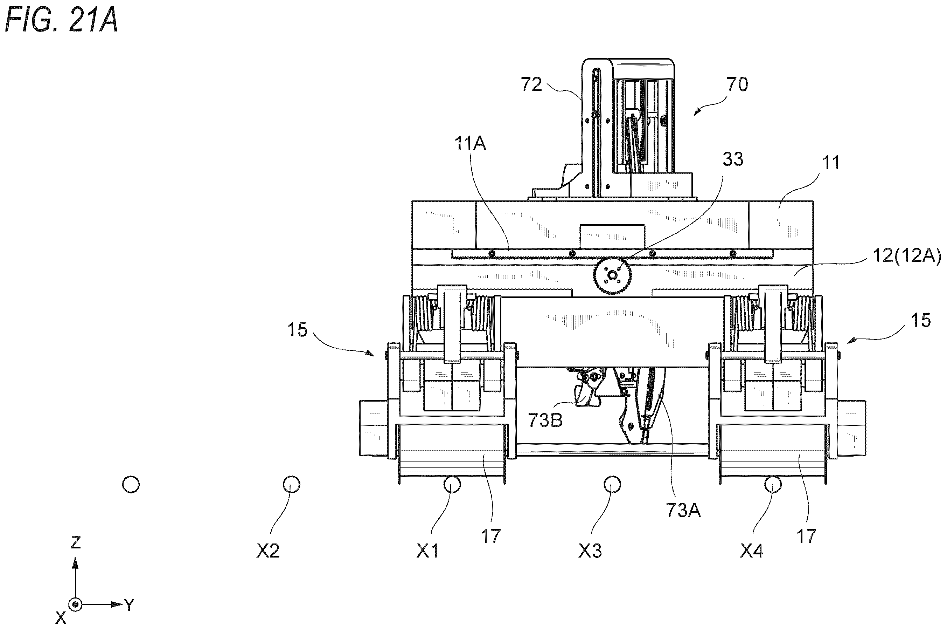

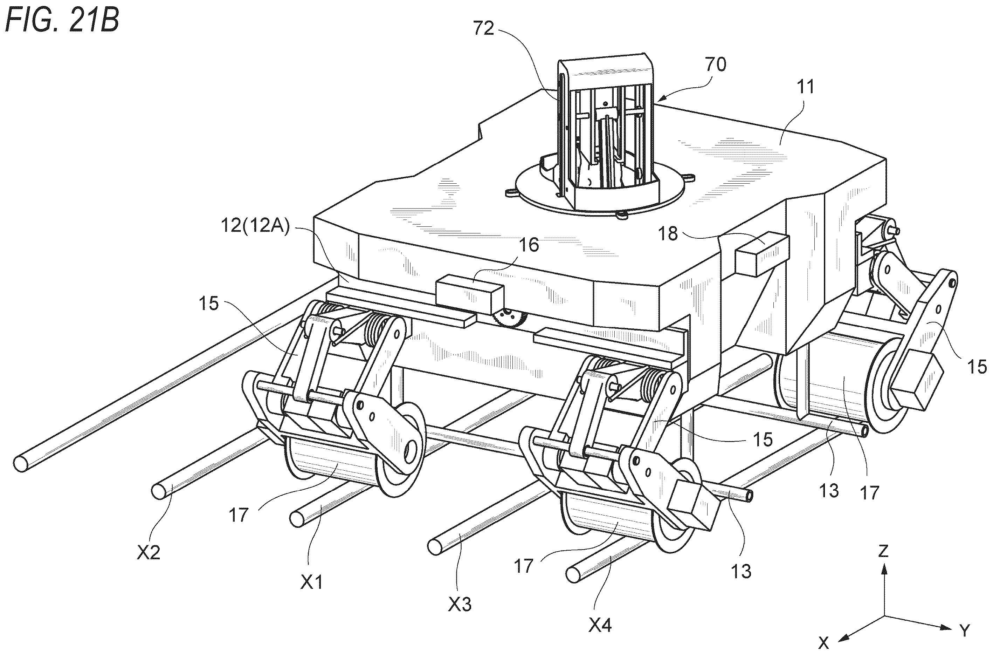

Next, as shown in FIGS. 21A and 21B, the reinforcing bar binding device 10 drives the lateral movement roller 33 in the forward direction, and moves the main body 11 in the Y-axis direction relative to the leg structure 12 while supporting the leg structure 12 by bringing each leg 15 constituting the leg structure 12 into contact with the longitudinal bars X1, X4 (corresponding to fourth processing). In this way, a relative position between the main body 11 and the leg structure 12 in the Y-axis direction is returned to an initial state.

Next, effects of the reinforcing bar binding device 10 of the present embodiment will be described, focusing in particular on effects when the reinforcing bar binding device 10 performs the lateral movement processing.

When performing the lateral movement processing, the reinforcing bar binding device 10 of the present embodiment repeats the processing of moving the leg structure 12 in the Y-axis direction relative to the main body 11 while supporting the main body 11 by bringing the support frame 13 into contact with the longitudinal bars X1, X3 or the longitudinal bars X3, X4, and the processing of moving the main body 11 in the Y-axis direction relative to the leg structure 12 while supporting the leg structure 12 by bringing the leg structure 12 into contact with the longitudinal bars X2, X3. In other words, the reinforcing bar binding device 10 can move in the Y-axis direction efficiently by moving in stages in the Y-axis direction. By moving in the Y-axis direction in stages, the reinforcing bar binding device 10 can reduce a weight of an object moved in one time of movement, and reduce a drive load for the lateral movement rollers 33. By moving in the Y-axis direction in stages, as compared with a case where the movement in the Y-axis direction is performed all at once, the reinforcing bar binding device 10 can prevent angular moment around the legs 15 supported by the longitudinal bars X2, X3 or the longitudinal bars X1, X4, and can more stably perform the lateral movement processing.

In addition, each leg 15 constituting the leg structure 12 includes the restricting link mechanism 45 that restricts the movement direction of the wheel 17. Therefore, the wheel 17 can be stably moved in a direction approaching or moving away from the longitudinal bars X2, X3 or the longitudinal bars X1, X4. Therefore, the reinforcing bar binding device 10 can prevent the wheels 17 from accidentally colliding with the longitudinal bars X2, X3 or the longitudinal bars X1, X4 when the wheels 17 move away from the longitudinal bars X2, X3 or the longitudinal bars X1, X4 in the Y-axis direction, and can stably perform the lateral movement processing of the reinforcing bar binding device 10.

When performing the lateral movement processing, if it is detected, based on the motor load of the motor driving the lateral movement roller 33, that the wheel 17 collides with the longitudinal bars X2, X3, the reinforcing bar binding device 10 further drives the lateral movement roller 33 in a direction of moving the wheel 17 away from the longitudinal bars X2, X3 in the Y-axis direction. Therefore, the reinforcing bar binding device 10 can perform the lateral movement processing more stably.

When the reinforcing bar binding device 10 moves forward, for the legs 15 positioned at the front side of the reinforcing bar binding device 10 among the plurality of legs 15 constituting the leg structure 12, the reinforcing bar binding device 10 drives the motor 51 that controls the extension and retraction of each leg 15 so that the connection section between the first link 42 positioned at the first end and the second link 43 positioned at the second end is disposed at the front side of the reinforcing bar binding device 10 in the displacement mechanism 41. The reinforcing bar binding device 10 then determines whether the reinforcing bar binding device 10 collides with an obstacle based on a change in the load of the motor that moves the reinforcing bar binding device 10 forward. Therefore, the reinforcing bar binding device 10 can determine whether the reinforcing bar binding device 10 collides with an obstacle when the reinforcing bar binding device 10 moves forward, without providing a new sensor.

When the reinforcing bar binding device 10 accelerates or decelerates forward, for the legs 15 positioned at the front side of the reinforcing bar binding device 10 among the plurality of legs 15 constituting the leg structure 12, the reinforcing bar binding device 10 drives the motor 51 that controls the extension and retraction of the leg 15 so that the connection section between the first link 42 positioned at the first end and the second link 43 positioned at the second end among the plurality of links constituting the link mechanism 41A is disposed at the front side of the reinforcing bar binding device 10 in the link mechanism 41A. For the legs 15 positioned at a rear side of the reinforcing bar binding device 10 among the plurality of legs 15 constituting the leg structure 12, the reinforcing bar binding device 10 drives the motor 51 that controls the extension and retraction of the leg 15 so that the connection section between the first link 42 positioned at the first end and the second link 43 positioned at the second end among the plurality of links constituting the link mechanism 41A is disposed at the rear side of the reinforcing bar binding device 10 in the link mechanism 41A. Therefore, when the reinforcing bar binding device 10 accelerates or decelerates forward, the height of the main body 11 can be prevented from fluctuating due to the extension and retraction of each leg 15 constituting the leg structure 12.

Next, the effects of the reinforcing bar binding device 10 of the present embodiment will be described, focusing in particular on effects when the reinforcing bar binding device 10 performs the binding processing.

The reinforcing bar binding device 10 of the present embodiment extends the legs 15 and causes the coil spring 50 to apply a biasing force in a direction of moving the wheels 17 close to the longitudinal bars X1, X2, and X3. Therefore, even if a center of gravity of the main body 11 moves up and down as the wire used for binding is consumed while the binding of the reinforcing bars progresses, the biasing force from the coil spring 50 acts in response to the movement of the center of gravity of the main body 11, so that the reinforcing bar binding device 10 can maintain the posture of the main body 11 in a desired posture, and can accurately perform the binding of the reinforcing bars.

By applying a biasing force from the coil spring 50 in a direction of extending the leg 15, the reinforcing bar binding device 10 can reduce power consumption when driving the motor 51 in the direction of extending the leg 15 to support the weight of the main body 11 by the amount of the biasing force of the coil spring 50. By providing the motor 51 individually for each leg 15 and controlling the drive of each motor 51 so that the power consumption of each motor 51 is minimized, the power consumption when the reinforcing bar binding device 10 performs leveling control can be further reduced.

In the reinforcing bar binding device 10 of the present embodiment, the binding mechanism 70 is inserted into the penetration 60 provided in the main body 11, and the binding mechanism 70 is configured to rotate in the circumferential direction around the opening center of the penetration 60 relative to the main body 11. Therefore, the reinforcing bar binding device 10 is configured to change the orientation of the two arms of the binding unit 73 of the binding mechanism 70 when performing binding processing on the binding section where the longitudinal bar and the lateral bar intersect with each other. Therefore, the reinforcing bar binding device 10 can use the wire to perform the binding processing on the binding section not only when the longitudinal bar and the lateral bar intersect with each other at a right angle, but also when the longitudinal bar and the lateral bar intersect with each other obliquely, making the binding processing highly versatile.

The above embodiment can also be implemented in the following forms.

In the above embodiment, an example has been described in which the reinforcing bar binding device 10 performs the lateral movement processing when moving to the longitudinal bar X4 adjacent to the longitudinal bar

X3 by which the leg 15 is supported. However, the present invention is not limited to the case where the reinforcing bar binding device 10 performs the lateral movement processing. For example, when the position of the binding unit 73 of the binding mechanism 70 and the position of the binding section do not coincide in the Y-axis direction when the reinforcing bar binding device 10 reaches the binding section, the position of the binding mechanism 70 in the Y-axis direction may be finely adjusted in a manner similar to the lateral movement processing described above. That is, by the reinforcing bar binding device 10 repeating the processing of moving the leg structure 12 in the Y-axis direction relative to the main body 11 while supporting the main body 11 by bringing the support frame 13 into contact with the longitudinal bars X1, X2, X3, and the processing of moving the main body 11 in the Y-axis direction relative to the leg structure 12 while supporting the leg structure 12 by bringing the leg structure 12 into contact with the longitudinal bars X2, X3, the position of the binding mechanism 70 in the Y-axis direction may be finely adjusted.

### [Appendix]

Technical ideas that can be understood from the above-described embodiment will be described below.

### [Appendix 1]

A reinforcing bar binding device, including:
a binding unit that binds a binding section where a reinforcing bar extending in a first direction intersects with a reinforcing bar extending in a second direction that intersects with the first direction; and
a main body to which the binding unit is mounted, in which
the main body holds the binding mechanism such that the binding mechanism is rotatable around a rotation axis that extends in a height direction of the main body.

### [Appendix 2]

The reinforcing bar binding device of Appendix 1, further includes:
a rotation drive unit that causes the binding unit held by the main body to rotate around the rotation axis extending in the height direction of the main body.

### [Appendix 3]

According to the reinforcing bar binding device of Appendix 1 or 2,
the main body includes a penetration that opens on an upper surface of the main body and extends in the height direction of the main body.

### [Appendix 4]

The reinforcing bar binding device of any one of Appendixes 1 to 4, further includes:
an elevating mechanism that raises and lowers the binding unit relative to the main body in the height direction of the main body.

### [Appendix 5]

The reinforcing bar binding device of Appendix 4, further includes:
a binding mechanism including the binding unit and the elevating drive unit, in which
the main body holds the binding mechanism such that the binding mechanism is rotatable around the rotation axis extending in the height direction of the main body.

### [Appendix 6]

According to the reinforcing bar binding device of Appendix 5,
an annular protrusion is provided on an outer surface of the binding mechanism, and
the protrusion is engaged with an upper surface of the main body in the height direction of the main body such that the protrusion is rotatable around the rotation axis extending in the height direction of the main body relative to the main body.

The present embodiment is described above with reference to specific examples. However, the present disclosure is not limited to these specific examples. Design changes made by those skilled in the art as appropriate to these specific examples are also included within the scope of the present disclosure as long as the changes have characteristics of the present disclosure. Elements, arrangements, conditions, shapes, and the like included in the specific examples described above are not limited to those illustrated, and can be appropriately changed. The elements included in the specific examples described above can be appropriately changed in combination as long as technical contradiction does not occur.

The present application is based on Japanese Patent Application No. 2023-007187 filed on January 20, 2023, the contents of which are incorporated herein by reference.

### INDUSTRIAL APPLICABILITY

The binding device according to the present disclosure can perform binding processing on a binding section of reinforcing bars with high versatility.

### REFERENCE SIGNS LIST

- 10: reinforcing bar binding device
- 11: main body
- 12: leg structure
- 12A: first unit
- 12B: second unit
- 1: support frame
- 15: leg
- 17: wheel
- 33: lateral movement roller
- 51: motor
- 52: motor
- 70: binding mechanism
- 71: holding unit
- 72: elevating unit
- 73: binding unit
- 100: control device
- 110: position information acquisition unit
- 120: following control unit
- 130: stop control unit
- 140: lateral movement control unit
- 150: elevating control unit
- 160: posture information acquisition unit
- 170: leveling control unit
- 180: motor control unit
- X1, X2, X3, X4: longitudinal bar
- Y1: lateral bar

## Claims

1. A reinforcing bar binding device, comprising:
a binding unit that binds a binding section where a reinforcing bar extending in a first direction intersects with a reinforcing bar extending in a second direction that intersects with the first direction; and
a main body to which the binding unit is mounted, wherein
the main body holds the binding unit such that the binding unit is rotatable around a rotation axis that extends in a height direction of the main body.

2. The reinforcing bar binding device according to claim 1, further comprising:
a rotation drive unit that causes the binding unit held by the main body to rotate around the rotation axis extending in the height direction of the main body.

3. The reinforcing bar binding device according to claim 1, wherein
the main body includes a penetration that opens on an upper surface of the main body and extends in the height direction of the main body.

4. The reinforcing bar binding device according to claim 1, further comprising:
an elevating drive unit that raises and lowers the binding unit relative to the main body in the height direction of the main body.

5. The reinforcing bar binding device according to claim 4, further comprising:
a binding mechanism including the binding unit and the elevating drive unit, wherein
the main body holds the binding mechanism such that the binding mechanism is rotatable around the rotation axis extending in the height direction of the main body.

6. The reinforcing bar binding device according to claim 5, wherein
an annular protrusion is provided on an outer surface of the binding mechanism, and
the protrusion is engaged with an upper surface of the main body in the height direction of the main body such that the protrusion is rotatable around the rotation axis extending in the height direction of the main body relative to the main body.
